(19) Europäisches Patentamt
European Patent Office
Office européen des brevets

(11) **EP 2 291 906 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **09769079.6**

(22) Anmeldetag: **18.05.2009**

(51) Int Cl.:
*H02M 1/34* (2007.01)        *H02M 7/5387* (2007.01)

(86) Internationale Anmeldenummer:
**PCT/EP2009/055977**

(87) Internationale Veröffentlichungsnummer:
**WO 2009/156230 (30.12.2009 Gazette 2009/53)**

(54) **WECHSELRICHTER UND VERFAHREN ZUM BETREIBEN DES WECHSELRICHTERS**

INVERTER AND METHOD FOR OPERATING THE INVERTER

ONDULEUR ET PROCÉDÉ DE FONCTIONNEMENT DE L'ONDULEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008 AT 10092008**

(43) Veröffentlichungstag der Anmeldung:
**09.03.2011 Patentblatt 2011/10**

(73) Patentinhaber: **Siemens Aktiengesellschaft
80333 München (DE)**

(72) Erfinder: **HALLAK, Jalal
A-1220 Wien (AT)**

(74) Vertreter: **Maier, Daniel Oliver
Siemens AG
Postfach 22 16 34
80506 München (DE)**

(56) Entgegenhaltungen:
**WO-A-94/23488        US-A- 4 937 725**

- **KWANG-HWA LIU ET AL: "ZERO-VOLTAGE SWITCHING TECHNIQUE IN DC/DC CONVERTERS" IEEE TRANSACTIONS ON POWER ELECTRONICS, IEEE SERVICE CENTER, PISCATAWAY, NJ, US, Bd. 5, Nr. 3, 1. Juli 1990 (1990-07-01), Seiten 293-304, XP000137426 ISSN: 0885-8993**

EP 2 291 906 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Wechselrichter zur Umwandlung einer eingangsseitigen Gleichspannung in eine ausgangsseitige Wechselspannung, eine H-Brücke mit vier Halbleiterschaltern umfassend, wobei zumindest ein Halbleiterschalter taktet, wobei des Weiteren zwischen der H-Brücke und ausgangsseitigen Wechselspannungsanschlüssen eine Speicherdrosselschaltung vorgesehen ist und wobei die Speicherdrosselschaltung einen Freilaufpfad mit einer Freilaufdiode zur Kommutierung des Stromes nach einem Abschaltvorgang eines Halbleiterschalters der H-Brücke umfasst. Des Weiteren betrifft die Erfindung ein Verfahren zum Betreiben des Wechselrichters.

Nach dem Stand der Technik sind verschiedenste Wechselrichtertopologien bekannt. Eine sehr häufige Ausprägung stellt die sogenannte H-Brücke dar. Dabei sind vier Halbleiterschalter, insbesondere IGBTs, in einer Brückenschaltung angeordnet. Die Ansteuerung der taktenden Halbleiterschalter erfolgt dabei in der Regel mittels Pulsbreitenmodulation zur Nachbildung eines sinusförmigen Spannungsverlaufs eines angeschlossenen Wechselspannungsnetzes, wobei die Taktfrequenz ein Vielfaches der Netzfrequenz beträgt.

Eine solche Wechselrichtertopologie ist aus der US-A-4937725 bekannt.

Wechselrichter werden vermehrt zur Einspeisung von Energie aus alternativen Energiequellen, beispielsweise Solargeneratoren oder Brennstoffzellen, in öffentliche Wechselstromnetze oder in Inselnetze herangezogen. Um diese Form der Energiegewinnung wirtschaftlich zu gestalten, müssen alle Komponenten einen hohen Wirkungsgrad aufweisen. Dies gilt insbesondere für Wechselrichter zur netzsynchronen Umwandlung der gewonnenen Energie.

Beispielsweise beschreiben die JP 2001 320 884 A oder die JP 2006 197 711 A Wechselrichter mit H-Brücken, deren Halbleiterschalter leistungslos schalten und somit die Gesamtverlustleistung minimieren. Man kennt dabei Nullspannungsschalten (zero voltage switching ZVS) und Nullstromschalten (zero current switching ZCS).

Eine weitere Quelle für Verlustleistungen stellen die Freilaufphasen nach Abschaltung eines Halbleiterschalters dar. Diese entstehen durch die ausgangsseitig angeordneten Drosselschaltungen, deren Drosselstrom bei abgeschaltetem Halbleiterschalter weiter fließt. Freilaufpfade innerhalb einer Wechselrichterschaltung verlaufen zumeist über parasitäre Dioden der Halbleiterschalter oder über eigens dafür angeordnete Freilaufdioden. Da an diesen Dioden in der Regel zu Beginn einer Freilaufphase eine Spannung anliegt, entstehen während des Anstiegs des Stromes durch die Dioden eine Verlustleistung, die den Wirkungsgrad des Wechselrichters nach oben hin beschränkt.

Der Erfindung liegt die Aufgabe zugrunde, die aus dem Stand der Technik bekannten Wechselrichter weiterzubilden, um einen verbesserten Wirkungsgrad zu erzielen.

Erfindungsgemäß wird diese Aufgabe gelöst mit einem Verfahren der eingangs genannten Art, wobei jeder taktende Halbleiterschalter zum Nullspannungsschalten an eine Resonanzschaltung gekoppelt ist, welche kapazitive Resonanzelemente und induktive Resonanzelemente umfasst, wobei der Freilaufpfad eine erste und eine zweite Freilaufdiode in Parallelschaltung umfasst, wobei diese Parallelschaltung in Serie mit den induktiven Resonanzelementen geschaltet ist und wobei die zweite Freilaufdiode mit kapazitiven Freilaufelementen in Serie geschaltet ist, welche als Elemente der Resonanzschaltung zu Beginn einer Freilaufphase zum Nullspannungsschalten der zweiten Freilaufdiode auf eine entsprechende Spannung aufgeladen sind. Die in der Resonanzschaltung während einer Abschaltphase gespeicherte Energie wird dabei genutzt, um in einer Einschaltphase des taktenden Halbleiterschalters die kapazitiven Freilaufelemente aufzuladen. Die Freilaufelemente sind dabei in Serie mit der zweiten Freilaufdiode geschaltet, um diese zu Beginn einer Freilaufphase spannungslos zu machen. Die kapazitiven Freilaufelemente entladen sich in einem ersten Zeitabschnitt des Freilaufs, wobei die erste Freilaufdiode spannungslos wird und der Freilaufstrom ohne Verluste zur ersten Freilaufdiode kommutiert.

Die Schaltung gemäß Anspruch 1 ermöglicht somit einerseits ein verlustloses Schalten der Halbleiterschalter der H-Brücke und andererseits einen nahezu verlustlosen Freilauf nach Abschaltung des taktenden Halbleiterschalters.

Dabei ist es von Vorteil, wenn jede Resonanzschaltung einen Resonanzkondensator und eine Resonanzdrossel umfasst, wobei ein Freilaufkondensator über Koppelelemente mit einem Resonanzkondensator verbunden ist und wobei ein erster Zweig des Freilaufpfads die ersten Freilaufdiode und die Resonanzdrossel in Serienschaltung umfasst und wobei ein zweiter Zweig des Freilaufpfads die zweite Freilaufdiode, die Resonanzdrossel und den Freilaufkondensator in Serienschaltung umfasst. Die Koppelelemente werden dabei beispielsweise durch Diodenschaltungen zur Festlegung einer entsprechenden Stromrichtung während einer Resonanzschwingung oder durch Übertrager gebildet. Über die Koppelelemente wird somit nach einem Einschaltvorgang des taktenden Halbleiterschalters Energie vom Resonanzkondensator auf den Freilaufkondensator übertragen, um für den nächsten Abschaltvorgang einen leistungslosen Freilauf sicherzustellen.

In einer Ausführungsform der Erfindung sind der erste Halbleiterschalter der H-Brücke über eine erste Speicherdrossel und der dritte Halbleiterschalter der H-Brücke über eine zweite Speicherdrossel mit einem ersten Wechselspannungsanschluss verbunden und der zweite Halbleiterschalter der H-Brücke über eine dritte Speicherdrossel und der vierte Halbleiterschalter der H-Brücke über eine vierte Speicherdrossel mit einem zweiten Wechselspannungsanschluss verbunden. Des Weiteren umfasst der Freilaufpfad eine weitere H-Brücke mit vier Hilfshalbleiterschaltern, wobei der erste Hilfshalbleiterschalter der weiteren H-Brücke über die erste Speicherdrossel und der dritte Hilfshalbleiterschalter der weiteren H-Brücke über die zweite Speicherdrossel mit dem ersten Wechselspannungsanschluss verbunden sind und wobei der zweite Hilfshalbleiterschalter der weiteren H-Brücke über die dritte Speicherdrossel und der vierte Hilfshalbleiterschalter der weiteren H-Brücke über die vierte Speicherdrossel mit dem zweiten Wechselspannungsanschluss verbunden sind.

Eine derartige Anschaltung der H-Brücke und der weiteren H-Brücke über vier Speicherdrosseln an die beiden Wechselspannungsanschlüsse hat den Vorteil, dass sowohl während einer positiven als auch während einer negativen Halbwelle der Wechselspannung ein Freilaufpfad ohne Nutzung der parasitären Dioden in den Hilfshalbleiterschaltern zur Verfügung steht. Damit werden Verluste vermieden, die sonst während eines Freilaufs durch die in der Regel langsamen parasitären Dioden verursacht werden.

Eine vorteilhafte Ergänzung dieser Schaltung mit einem Übertrager als Koppelelement sieht vor, dass die Verbindung des dritten und des vierten Hilfshalbleiterschalters und die Verbindung des ersten und des zweiten Hilfshalbleiterschalters über eine Serienschaltung aus erster Freilaufdiode und einer Resonanzdrossel verbunden sind, dass parallel zur ersten Freilaufdiode eine Serienschaltung aus zweiter Freilaufdiode und Freilaufkondensator angeordnet ist, dass des Weiteren ein Verbindungspunkt zwischen zweiter Freilaufdiode und Freilaufkondensator über eine Serienschaltung aus einer dritten Diode und einer vierten Diode mit der Verbindung des ersten und des zweiten Hilfshalbleiterschalters verbunden ist, dass parallel zur dritten Diode eine Sekundärwicklung eines Transformators angeordnet ist, welcher zudem zwei Primärwicklungen umfasst, wobei die erste Primärwicklung mit einem Ende an die Verbindung des ersten und des zweiten Halbleiterschalters der H-Brücke angeschaltet ist und mit dem anderen Ende über einen ersten Resonanzkondensator an die Verbindung zwischen erstem Halbleiterschalter und erster Speicherdrossel sowie über einen zweiten Resonanzkondensator an die Verbindung zwischen zweitem Halbleiterschalter und dritter Speicherdrossel angeschaltet ist und wobei die zweite Primärwicklung mit einem Ende an die Verbindung des dritten und des vierten Halbleiterschalters der H-Brücke angeschaltet ist und mit dem anderen Ende über einen dritten Resonanzkondensator an die Verbindung zwischen dritten Halbleiterschalter und zweiter Speicherdrossel sowie über einen vierten Resonanzkondensator an die Verbindung zwischen vierten Halbleiterschalter und vierter Speicherdrossel angeschaltet ist.

In einer anderen Ausführungsform ist die eine Hälfte der H-Brücke über eine erste Speicherdrossel mit einem ersten Wechselspannungsanschluss verbunden und die andere Hälfte der H-Brücke über eine zweite Speicherdrossel mit einem zweiten Wechselspannungsanschluss verbunden. Des Weiteren umfasst der Freilaufpfad eine weitere H-Brücke mit vier Hilfshalbleiterschaltern, wobei die eine Hälfte der weiteren H-Brücke über die erste Speicherdrossel an den ersten Wechselspannungsanschluss geschaltet ist und die andere Hälfte der weiteren H-Brücke über die zweite Speicherdrossel an den zweiten Weichselspannungsanschluss geschaltet ist.

Eine derartige Schaltung mit nur zwei Speicherdrosseln an den Wechselrichterausgängen ist dann sinnvoll, wenn die Hilfshalbleiterschalter über schnelle parasitäre Dioden verfügen, wodurch die Verluste während des Freilaufs klein gehalten werden. Bei beiden zuvor genannten Ausführungsformen takten während einer positiven Halbwelle der erste und der vierte Halbleiterschalter und während einer negativen Halbwelle der zweite und der dritte Halbleiterschalter.

Für beide zuvor genannten Ausführungsformen ist als Alternative zu einem Übertrager als Koppelelement eine Schaltungsergänzung vorteilhaft, bei der die Verbindung des dritten und des vierten Hilfshalbleiterschalters und die Verbindung des ersten und des zweiten Hilfshalbleiterschalters über eine Serienschaltung aus einer zweiten Resonanzdrossel, der ersten Freilaufdiode und einer ersten Resonanzdrossel verbunden sind, und bei der parallel zur ersten Freilaufdiode eine Serienschaltung aus einem zweitem Freilaufkondensator, der zweiten Freilaufdiode und einem ersten Freilaufkondensator angeordnet ist. Des Weiteren sind ein Verbindungspunkt zwischen zweiter Freilaufdiode und erstem Freilaufkondensator über eine Serienschaltung aus einer dritten Diode und einer vierten Diode mit der Verbindung des ersten und des zweiten Hilfshalbleiterschalters verbunden und die Verbindung des dritten und des vierten Hilfshalbleiterschalters über eine sechste Diode und eine fünfte Diode mit einem Verbindungspunkt zwischen zweiter Freilaufdiode und zweitem Freilaufkondensator verbunden. Zudem sind ein Verbindungspunkt zwischen dritter und vierter Diode über einen ersten Resonanzkondensator mit der Verbindung des ersten Halbleiterschalters und des zweiten Halbleiterschalters verbunden und ein Verbindungspunkt zwischen fünfter und sechster Diode über einen zweiten Resonanzkondensator mit der Verbindung des dritten Halbleiterschalters und des vierten Halbleiterschalters verbunden.

Damit sind zwischen den Resonanzkomdensatoren, den Resonanzdrosseln und den Freilaufkondensatoren einfache Diodenschaltungen als Koppelelemente angeordnet. Die Stromflüsse zwischen diesen Bauelementen fließen während eines Taktzykluses in der Weise, dass die Dioden in diesen Diodenschaltungen ebenso wie die Freilaufdioden verlustlos leitend werden. Ein Taktzyklus bestimmt sich dabei von einem Einschaltvorgang eines taktenden Halbleiterschalters bis zum nächsten Einschaltvorgang.

Zum Nullspannungsschalten des ersten und des zweiten Halbleiterschalters wird der erste Resonanzkreis, welcher den ersten Resonanzkondensator, den ersten Freilaufkondensator und die erste Resonanzdrossel umfasst, genutzt. Der zweite Resonanzkreis, welcher den zweiten Resonanzkondensator, den zweiten Freilaufkondensator und die zweite Resonanzdrossel umfasst, dient dem Nullspannungsschalten des dritten und des vierten Halbleiterschalters. Dabei sind vor einem Einschaltvorgang die Resonanzkondensatoren auf nahezu die halbe eingangsseitige Gleichspannung aufgeladen.

Eine weitere Ausführungsform der Erfindung sieht vor, dass ein erster H-Brückenanschluss zwischen erstem Halbleiterschalter und viertem Halbleiterschalter über eine erste Speicherdrossel mit einem ersten Wechselspannungsanschluss verbunden ist und dass ein zweiter H-Brückenanschluss zwischen zweitem Halbleiterschalter und drittem Halbleiterschalter über eine zweite Speicherdrossel mit einem zweiten Wechselspannungsanschluss verbunden ist und dass die Wechselspannungsanschlüsse über eine Primärwicklung eines Netztransformators miteinander verbunden sind, dass des Weiteren die Verbindung des dritten und des vierten Halbleiterschalters über eine Serienschaltung aus erster Freilaufdiode und erster Resonanzdrossel mit dem ersten H-Brückenanschluss verbunden sind, dass parallel zur ersten Freilaufdiöde eine Serienschaltung aus zweiter Freilaufdiode und erstem Freilaufkondensator angeordnet ist, dass parallel zum ersten Halbleiterschalter eine Serienschaltung aus einem ersten Resonanzkondensator und einer vierten Diode angeordnet ist und dass ein Verbindungspunkt zwischen zweiter Freilaufdiode und erstem Freilaufkondensator über eine dritte Diode mit einem Verbindungspunkt zwischen erstem Resonanzkondensator und vierter Diode verbunden ist, dass des Weiteren die Verbindung des dritten und des vierten Halbleiterschalters über eine Serienschaltung einer weiteren ersten Freilaufdiode und zweiten Resonanzdrossel mit dem zweiten H-Brückenanschluss verbunden sind, dass parallel zur weiteren ersten Freilaufdiode eine Serienschaltung aus einer weiteren zweiten Freilaufdiode und einem zweiten Freilaufkondensator angeordnet ist, dass parallel zum zweiten Halbleiterschalter eine Serienschaltung aus einem zweiten Resonanzkondensator und einer fünften Diode angeordnet ist und dass ein Verbindungspunkt zwischen weiterer zweiter Freilaufdiode und dem zweiten Freilaufkondensator über eine sechste Diode mit einem Verbindungspunkt zwischen zweitem Resonanzkondensator und fünfter Diode verbunden ist.

Dieser Ausführungsform ist also als Wechselrichter mit Netztransformator ausgebildet. Dabei taktet in der Regel nur ein Halbleiterschalter, nämlich während einer positiven Halbwelle nur der erste Halbleiterschalter; der dritte Halbleiterschalter ist immer eingeschaltet und der zweite und der vierte Halbleiterschalter sind immer ausgeschaltet.

Während einer negativen Halbwelle taktet der zweite Halbleiterschalter und der vierte Halbleiterschalter ist immer eingeschaltet; der erste und der dritte Halbleiterschalter sind immer ausgeschaltet.

Anstelle einer weiteren H-Brücke sind hier zwei Freilaufdioden für die positive Halbwelle und zwei Freilaufdioden für die negative Halbwelle mit entsprechenden Resonanzschaltungen und Freilaufkondensatoren vorgesehen.

Günstig ist es, wenn die Gleichspannungsanschlüsse über einen Eingangskondensator miteinander verbunden sind. Das ist vor allem dann angebracht, wenn eingangseitig eine in der Leistung schwankende Energiequelle angeschlossen ist, beispielsweise ein Solargenerator.

Günstig ist es auch, wenn zur Glättung der ausgangsseitigen Wechselspannung die Wechselspannungsanschlüsse über einen Ausgangskondensator miteinander verbunden sind.

Ein Verfahren zum Betreiben eines der zuvor beschriebenen Wechselrichter sieht vor, dass zu Beginn eines Taktzykluses wenigstens ein Halbleiterschalter der H-Brücke eingeschaltet wird, dass dabei die eingangsseitige Gleichspannung auf die induktiven Resonanzelemente der jeweiligen Resonanzschaltung gezogen wird, wodurch der noch als Freilaufstrom durch die induktiven Resonanzelemente fließende Strom abnimmt und seine Richtung umkehrt und dass in weiterer Folge mittels dieses Stromes Energie von den kapazitiven Resonanzelementen auf die kapazitiven Freilaufelemente übertragen wird, dass nach Ablauf einer vorgegeben Einschaltzeit der zumindest eine taktende Halbleiterschalter wieder abgeschaltet wird und zumindest ein Teil des Freilaufstromes durch die zweite Freilaufdiode, die kapazitiven Freilaufelemente und die induktiven Resonanzelemente fließt, bis die kapazitiven Freilaufelemente entladen sind und der restliche Freilaufstrom durch die erste Freilaufdiode und die induktiven Resonanzelemente fließt. Damit ist eine passive, verlustarme Methode zur Reduzierung der Schaltverluste an Halbleitern, insbesondere IGBTs, eines als H-Brücke konzipierten Wechselrichters angegeben.

Die Erfindung wird nachfolgend in beispielhafter Weise unter Bezugnahme auf die beigefügten Figuren erläutert. Es zeigen in schematischer Darstellung:

Fig. 1     Transformatorlose H-Brückenschaltung mit vier ausgangsseitigen Speicherdrosseln und Resonanzschaltung mit Dioden als Koppelelemente

Fig. 2     Transformatorlose H-Brückenschaltung mit vier ausgangsseitigen Speicherdrosseln ohne Resonanzschaltung

Fig. 3-6     Schaltung gemäß Fig. 2 mit Stromflüssen während eines Taktzykluses

Fig. 7-11     Schaltung gemäß Fig. 1 mit Stromflüssen während eines Taktzykluses

Fig. 12-14     Verlauf der Ströme und Spannungen über der Zeit für eine Schaltung gemäß Fig. 1

Fig. 15     Netztransformatorlose H-Brückenschaltung mit vier ausgangsseitigen Speicherdrosseln und Resonanzschaltung mit Übertrager als Koppelelement

Fig. 16-20    Schaltung gemäß Fig. 15 mit Stromflüssen während eines Taktzykluses

Fig. 21    Transformatorlose H-Brückenschaltung mit zwei ausgangsseitigen Speicherdrosseln und Resonanzschaltung mit Dioden als Koppelelemente

Fig. 22-26    Schaltung gemäß Fig. 21 mit Stromflüssen während eines Taktzykluses

Fig. 27-29    Verlauf der Ströme und Spannungen über der Zeit für eine Schaltung gemäß Fig. 21

Fig. 30    H-Brückenschaltung mit Netztransformator

Fig. 31    H-Brückenschaltung mit Netztransformator und Resonanzschaltung

Fig. 32-36    Schaltung gemäß Fig. 31 mit Stromflüssen während eines Taktzykluses bei einer positiven Halbwelle

Fig. 37-41    Schaltung gemäß Fig. 31 mit Stromflüssen während eines Taktzykluses bei einer negativen Halbwelle

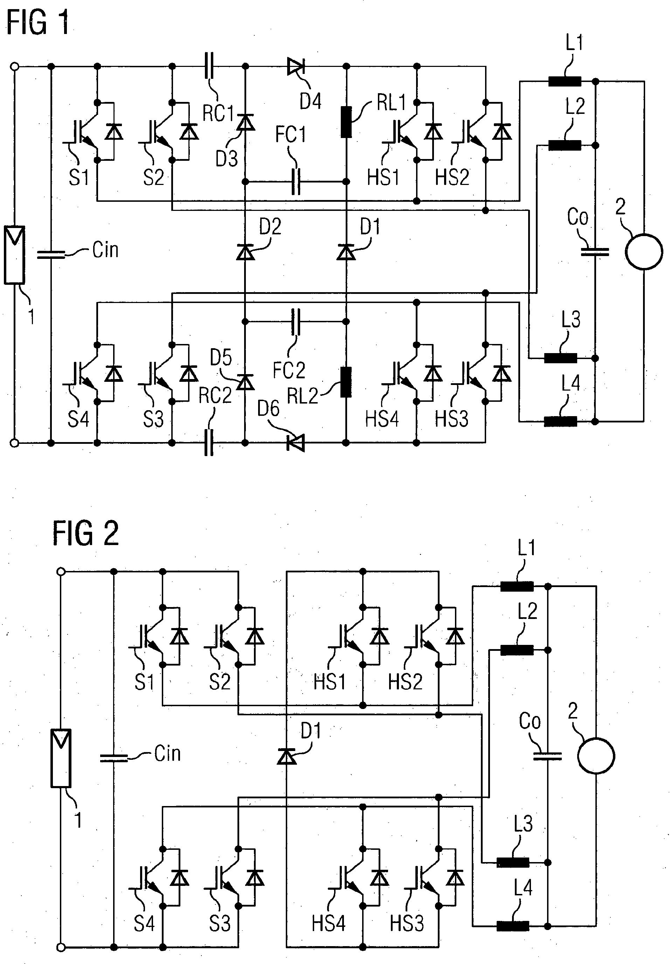

Eine erste Ausführungsform der Erfindung ist in Fig. 1 dargestellt. Bei dieser trafolosen Ausführung ist die H-Brücke mit vier Halbeiterschaltern S1, S2, S3, S4 eingangseitig an eine Energiequelle 1, z.B. eine Stromquelle, eine Spannungsquelle oder eine nichtlineare Quelle (Solargenerator) geschaltet. Dabei puffert ein Eingangskondensator Cin die Energie in einem vorgegebenen Spannungsbereich.

Der erste Halbleiterschalter S1 ist über eine erste Speicherdrossel L1 und der dritte Halbleiterschalter S3 ist über eine zweite Speicherdrossel L2 mit einem ersten Wechselspannungsanschluss verbunden. Der zweite Halbleiterschalter S2 ist über eine dritte Speicherdrossel L3 und der vierte Halbleiterschalter S4 ist über ein vierte Speicherdrossel L4 mit einem zweiten Wechselspannungsanschluss verbunden. An die beiden Wechselrichteranschlüsse ist beispielsweise ein Verbrauchernetz 2 angeschlossen. Dabei sorgt ein Ausgangskondensator Co für eine Glättung des in das Verbrauchernetz 2 eingespeisten Stromes.

Als Teil einer Freilaufschaltung ist eine weitere H-Brücke mit vier Hilfshalbleiterschaltern HS1, HS2, HS3, HS4 angeordnet. Diese Hilfshalbleiterschalter HS1, HS2, HS3, HS4 sind parallel zu den Halbleiterschalter S1, S2, S3, S4 der ersten H-Brücke an die vier Speicherdrosseln L1, L2, L3, L4 geschaltet. Die Zählung der Halbleiterschalter S1, S2, S3, S4 und der Hilfshalbleiterschalter HS1, HS2, HS3, HS4 erfolgt dabei in der für eine H-Brückendarstellung üblichen Weise im Uhrzeigersinn. Die Halbleiterschalter S1, S2, S3, S4 und Hilfshalbeiterschalter HS1, HS2, HS3, HS4 sind beispielsweise als IGBTs ausgebildet. In Fig. 1 sind sie als solche mit jeweils einer parasitären Diode (Bodydiode) dargestellt.

Zum Nullspannungsschalten der Halbleiterschalter S1, S2, S3, S4 ist eine zweifache Resonanzschaltung angeordnet. Dabei ist eine Seite einer ersten Resonanzdrossel RL1 mit der Kathode einer vierten Diode D4 verbunden. Die Anode dieser vierten Diode D4 ist über einen ersten Resonanzkondensator RC1 an die Brückenverbindung des ersten und des zweiten Halbleiterschalters S1, S2 angeschlossen. Zudem ist diese eine Seite der ersten Resonanzdrossel RL1 mit der Brückenverbindung des ersten und des zweiten Hilfshalbleiterschalters HS1, HS2 verbunden. Die andere Seite der ersten Resonanzdrossel RL1 ist an die Kathode einer ersten Freilaufdiode D1 angeschaltet und zudem über einen ersten Freilaufkondensator FC1 einerseits mit der Kathode einer zweiten Freilaufdiode D2 und andererseits über eine dritte Diode D3 mit einem Verbindungspunkt zwischen erstem Resonanzkondensator RC1 und vierter Diode D4 verbunden. Die dritte Diode D3 ist dabei vom ersten Freilaufkondensator FC1 zum ersten Resonanzkondensator RC1 in Durchlassrichtung geschaltet.

In gleicher Weise ist eine Seite eines zweiten Resonanzkondensators RL2 über eine sechste Diode D6 und einen zweiten Resonanzkondensator RC2 an die Brückenverbindung zwischen drittem und viertem Halbleiterschalter S3, S4 angeschlossen. Dabei ist die sechsten Diode D6 von der zweiten Resonanzdrossel RL2 zum zweiten Resonanzkondensator RC2 in Durchlassrichtung angeordnet. Diese eine Seite der zweiten Resonanzdrossel RL2 ist zudem an die Brückenverbindung zwischen drittem und viertem Hilfshalbleiterschalter HS3, HS4 angeschaltet. Die andere Seite der zweiten Resonanzdrossel RL2 ist einerseits mit der Anode der ersten Feilaufdiode D1 und andererseits über einen zweiten Freilaufkondensator FC2 mit der Anode der zweiten Freilaufdiode D2 verbunden. Zudem ist eine fünfte Diode D5 mit Durchlassrichtung vom zweiten Resonanzkondensator RC2 zum zweiten Freilaufkondensator FC2 angeordnet.

Die Stromflüsse während einer Freilaufphase werden der Einfachheit halber anhand einer H-Brücke ohne Resonanzschaltung erläutert. Eine entsprechende Schaltung ist in Fig. 2 dargestellt. Gegenüber Fig. 1 ist anstelle der Elemente der Resonanzschaltung und des Freilaufs nur eine Freilaufdiode D1 dargestellt, die in Durchlassrichtung die Brückenverbindung des dritten und des vierten Hilfshalbleiterschalters HS3, HS4 mit der Brückenverbindung des ersten und des zweiten Hilfshalbleiterschalters HS1, HS2 verbindet.

Die Hauptschaltung besteht aus einer H-Brücke, deren Halbleiterschalter S1, S2, S3, S4 mittels einer Steuerung mit vorgegeben Taktfrequenz geschaltet werden. Die Hilfsschaltelemente HS1, HS2, HS3, HS4 werden mittels Steuerung mit einer vorgegebenen Netzfrequenz (z.B. 50Hz) ein- und ausgeschaltet. Die Taktfrequenz übersteigt dabei die Netzfrequenz um ein Vielfaches.

Die Schaltung ermöglicht dem Freilaufstrom der Speicherdrosseln L1, L2, L3, L4, nach dem Abschalten der Halbleiterschalter S1, S4 während einer positiven Halbwelle bzw. S2, S3 während einer negativen Halbwelle, nur durch wie Gleichrichterdiode D1 und nicht durch die langsamer schaltenden parasitären Dioden der Hilfshalbleiterschalter HS1, HS2, HS3, HS4 zu fließen.

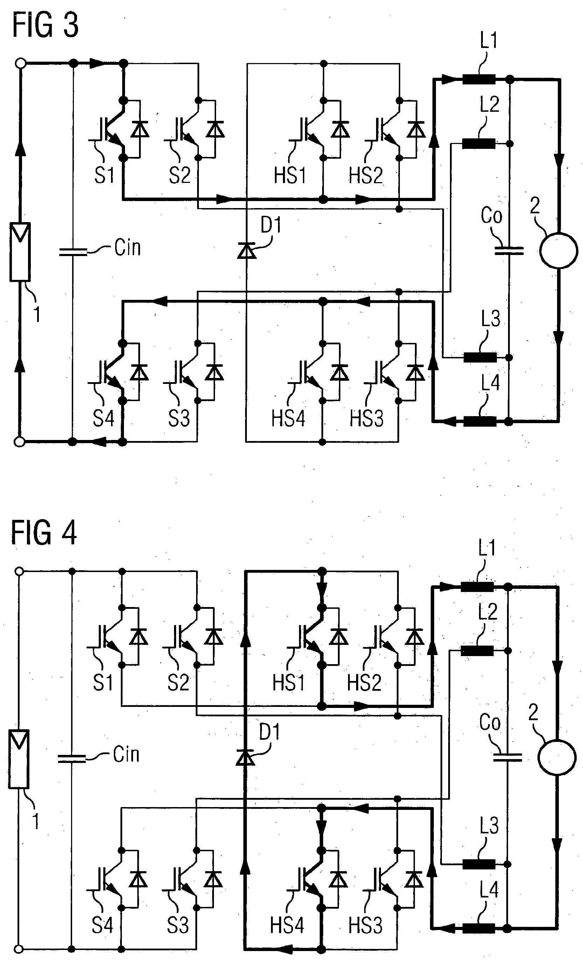

In den Figuren 3 und 4 sind die Schaltphasen während einer positiven Halbwelle des ausgangsseitigen Wechselstromes dargestellt. Der erste und der vierte Halbleiterschalter S1, S4 werden mit der Taktfrequenz geschaltet, der zweite und der dritte Halbleiterschalter S2, S3 bleiben ausgeschaltet. Der erste und der vierte Hilfshalbleiterschalter HS1, HS4 sind während einer positiven Halbwelle immer eingeschaltet, die beiden anderen Hilfshalbleiterschalter HS2, HS3 sind entweder ausgeschaltet oder takten invertierend zu den taktenden Halbleiterschaltern S1, S4 der ersten H-Brücke.

Während einer Einschaltphase (Fig. 3) sind der erste und der vierte Halbleiterschalter S1, S4 eingeschaltet. Der Strom fließt von der Energiequelle 1 kommend durch den ersten Halbleiterschalter S1, die erste Speicherdrossel L1, ein angeschlossenes Netz 2 und weiter über die vierte Speicherdrossel L4 sowie den vierten Halbleiterschalter S4 zurück zur Energiequelle 1.

Während einer Ausschaltphase (Fig. 4) sind der erste und der vierte Halbleiterschalter S1, S4 ausgeschaltet. Der Freilaufstrom der ersten und der vierten Speicherdrossel L1, L4 fließt durch die Freilaufdiode D1, den ersten und den vierten Hilfshalbleiterschalter HS1, HS4 und über das Netz 2.

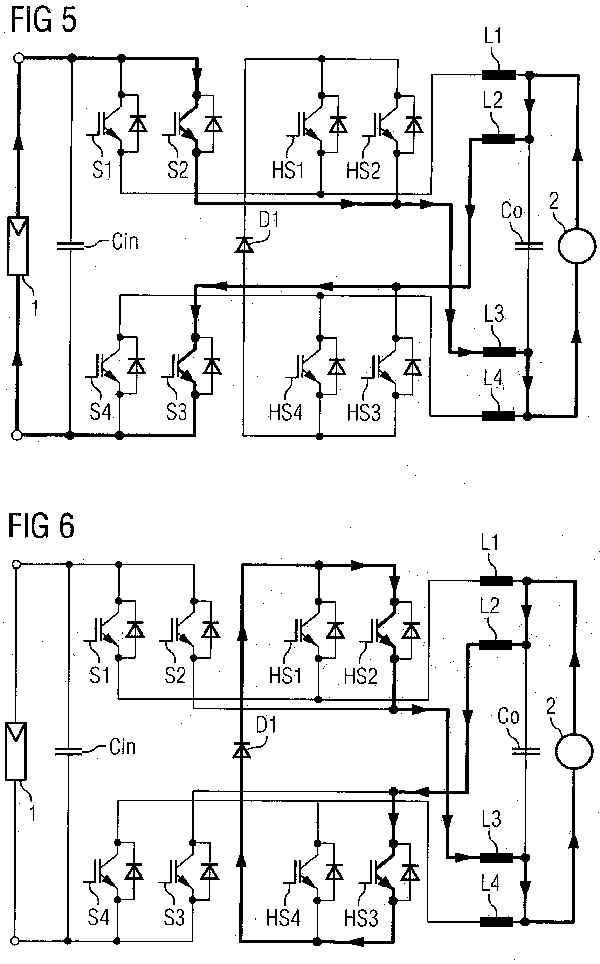

Analog zu den Schaltphasen während einer positiven Halbwelle sind in den Figuren 5 und 6 die Schaltphasen während einer negativen Halbwelle dargestellt. Der erste und der vierte Halbleiterschalter S1, S4 sind während einer negativen Halbwelle immer ausgeschaltet. Der zweite und der dritte Halbleiterschalter S2, S3 takten mit der Taktfrequenz. Der erste und der vierte Hilfshalbleiterschalter HS1, HS4 sind entweder ausgeschaltet oder takten invertierend zu den taktenden Halbleiterschaltern S2, S3 der ersten H-Brücke. Die beiden anderen Hilfshalbleiterschalter HS2, HS3 sind während einer negativen Halbwelle immer eingeschaltet.

Während einer Einschaltphase (Fig. 5) fließt der Strom von der Energiequelle 1 kommend durch den zweiten Halbleiterschalter S2, die dritte Speicherdrossel L3, das angeschlossene Netz 2 und über die zweite Speicherdrossel L2 und den dritten Halbleiterschalter S3 zurück zur Energiequelle 1.

Bei einer anschließenden Ausschaltphase (Fig. 6) sind der zweite und der dritte Halbleiterschalter S2, S3 ausgeschaltet. Der Freilaufstrom der zweiten und der dritten Speicherdrossel L2, L3 fließt wieder durch die Freilaufdiode D1 und zudem durch den zweiten und dritten Hilfshalbleiterschalter HS2, HS3 sowie über das Netz 2.

Um das Resonanzschaltverhalten einer Schaltung gemäß Fig. 1 besser erläutern zu können, wird im Folgenden ein Taktzyklus (eine Abfolge einer Einschaltphase und einer Ausschaltphase) in mehrere Zeitabschnitte unterteilt.

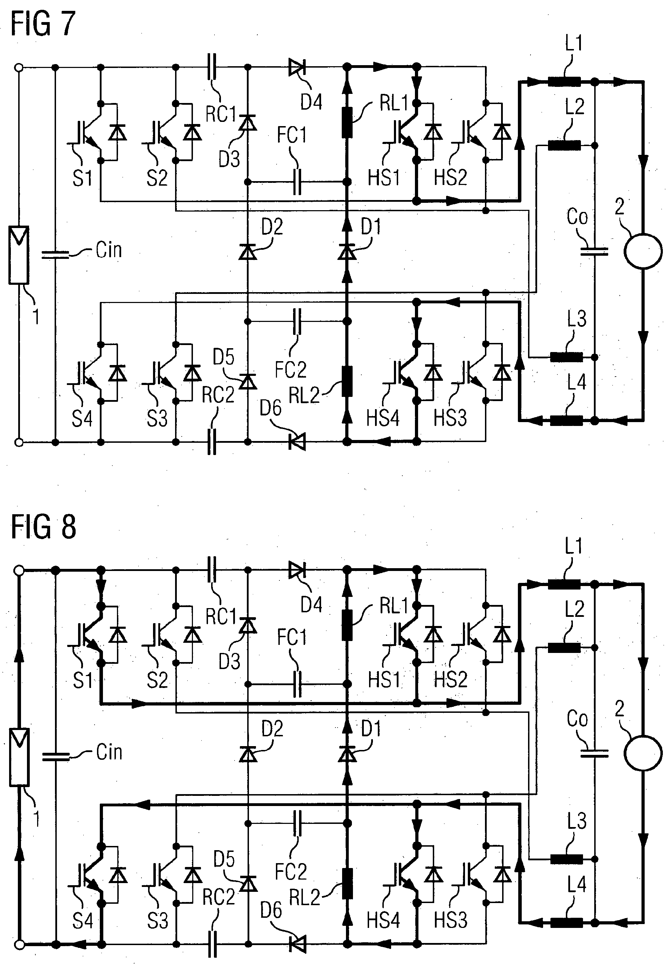

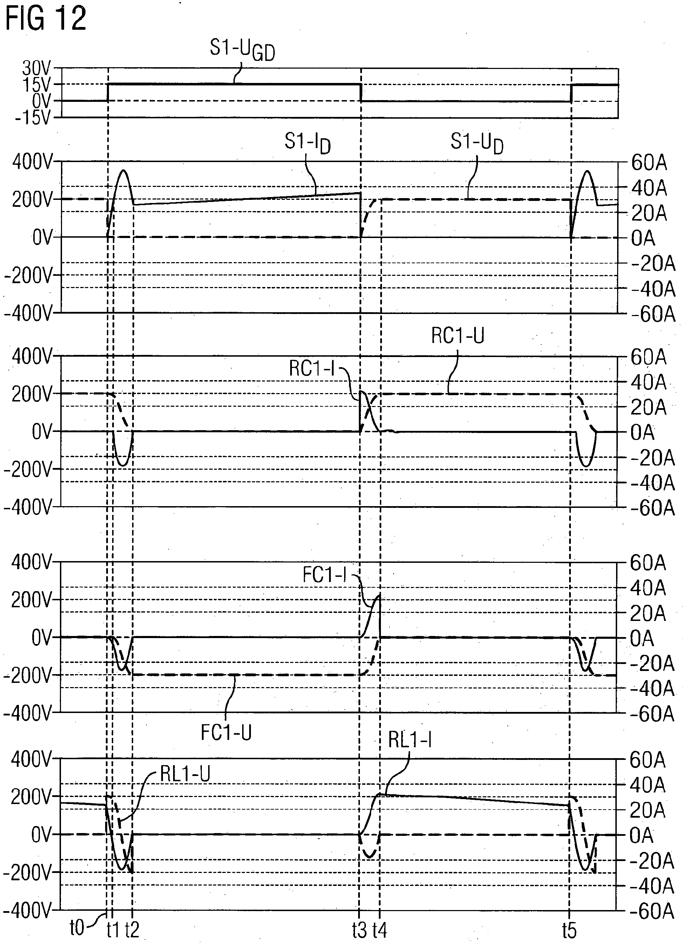

In den Figuren 7 bis 11 ist die eingangs beschriebene Ausführungsform mit Resonanzschaltungen (Fig. 1) dargestellt, wobei die in einzelnen Zeitabschnitten auftretenden Stromflüsse während einer positiven Halbwelle eingezeichnet sind. Die entsprechenden Strom- und Spannungsverläufe über der Zeit sind in den Figuren 12 bis 14 dargestellt.

Ein Taktzyklus beginnt zum Einschaltzeitpunkt t0 mit dem Einschalter des ersten und des vierten Halbleiterschalters S1, S4. Dabei wird angenommen, dass kurz vor dem Einschalten der Freilaufstrom der ersten und vierten Speicherdrossel L1, L4 über den ersten und vierten Hilfshalbleiterschalter HS1, HS4 und die erste und die zweite Resonanzdrossel RL1, RL2 durch die erste Freilaufdiode D1 fließt. Weiters ist der erste Resonanzkondensator RC1 auf nahezu die halbe Spannung des Eingangskondensators Cin (bzw. die halben Spannung eines beispielsweise eingangsseitig angeschlossenen Solargenerators) aufgeladen, wobei das negative Potenzial des ersten Resonanzkondensators RC1 an der Anode der vierten Diode D4 liegt. Der zweite Resonanzkondensator RC2 ist ebenfalls auf die halbe Spannung des Eingangskondensator Cin (bzw. die halben Spannung eines beispielsweise eingangsseitig angeschlossenen Solargenerators) aufgeladen, wobei sein positives Potenzial an der Kathode der sechsten Diode D6 liegt (Fig. 7).

Ein erster Zeitabschnitt t0-t1 ist in Fig. 8 dargestellt. Dabei sind der erste und der vierte Halbleiterschalter S1, S4 eingeschaltet. Der Strom aus der eingangsseitigen Energiequelle 1 fließt über den ersten und den vierten Halbleiterschalter S1, S4 durch die erste und die vierte Speicherdrossel L1, L4. Mit dem Einschalter des ersten Halbleiterschalters S1 wird auch ein erster Resonanzkreis, bestehend aus dem ersten Resonanzkondensator RC1, der ersten Resonanzdrossel RL1 und dem ersten Freilaufkondensator FC1, aktiviert. Die Resonanzfrequenz $\omega_0$ errechnet sich dabei aus mit folgender Formel:

$$\omega_0{}^2 \;=\; 1/\,(\,(\,(RC1*FC1)\,/\,(RC1+FC1)\,)\,*RL1\,)$$

Analoges gilt für einen zweiten Resonanzkreis, bestehend aus dem zweiten Resonanzkondensator RC2, der zweiten Resonanzdrossel RL2 und dem zweiten Freilaufkondensator FC2, welcher durch das Einschalten des vierten Halbleiterschalters S4 aktiviert wird.

Durch das Einschalten des ersten Halbleiterschalters S1 geht das Potenzial am Emitter des ersten Hilfshalbleiterschalters HS1 massiv nach oben, die erste Resonanzdrossel RL1 baut dabei ihre gespeicherte Energie ab, indem sie ihren Strom in eine sehr hohe Spannung hineintreibt (die beiden Resonanzdrosseln RL1, RL2 liegen gewissermaßen an der eingangsseitigen Spannung). Nach sehr kurzer Zeit haben diese beiden Induktivitäten RL1, RL2 ihr Magnetfeld aufgebaut. Dadurch geht der Freilaufstrom in der ersten Freilaufdiode D1 über die beiden Resonanzdrosseln RL1, RL2 gegen Null.

Der entsprechende Verlauf der Ströme und Spannungen über der Zeit ist in den Figuren 12-14 dargestellt, wobei das jeweils oberste Diagramm die Gate-Source-Spannung S1-$U_{GD}$ am ersten Halbleiterschalter S1 zeigt. In Fig. 12 ist darunter der Verlauf des Drainstromes S1-$I_D$ und der Drainspannung S1-$U_D$ des ersten Halbleiterschalters S1 in einem Diagramm dargestellt. Es folgen von oben nach unten ein Diagramm mit dem Strom RC1-I und der Spannung RC1-U des ersten Resonanzkondensators RC1 über der Zeit, ein Diagramm mit dem Strom FC1-I und der Spannung FC1-U des ersten Freilaufkondensators FC1 über der Zeit und ein Diagramm mit dem Strom RL1-I und der Spannung RL1-U der ersten Resonanzdrossel RL1 über der Zeit.

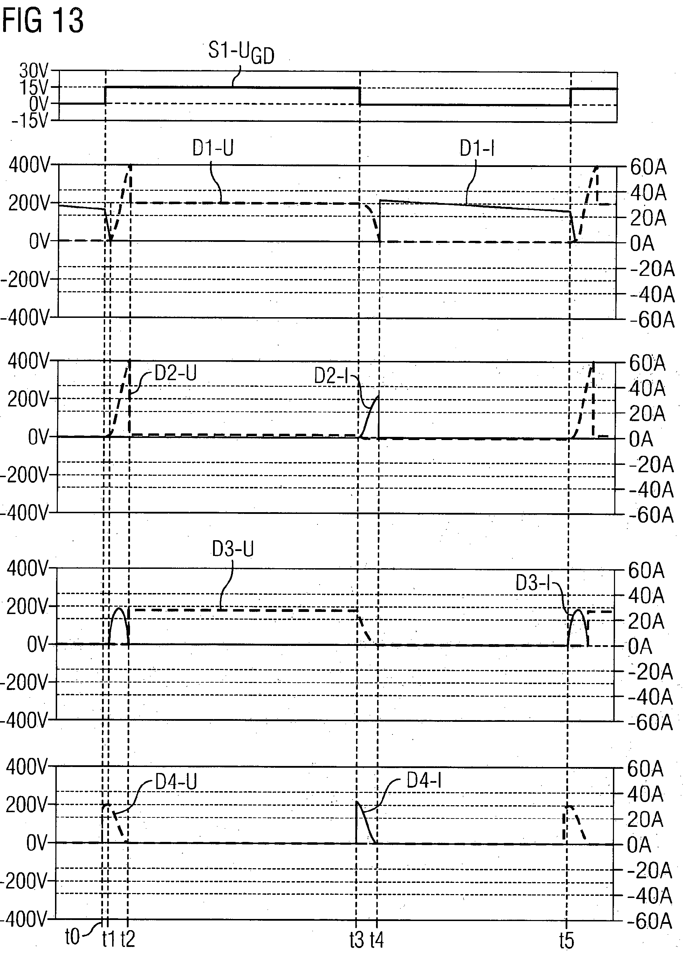

Fig. 13 zeigt von oben nach unten den Strom D1-I und die Spannung D1-U der ersten Freilaufdiode D1, den Strom D2-I und die Spannung D2-U der zweiten Freilaufdiode D2, den Strom D3-I und die Spannung D3-U der dritten Diode D3 sowie den Strom D4-I und die Spannung D4-U der vierten Diode D4.

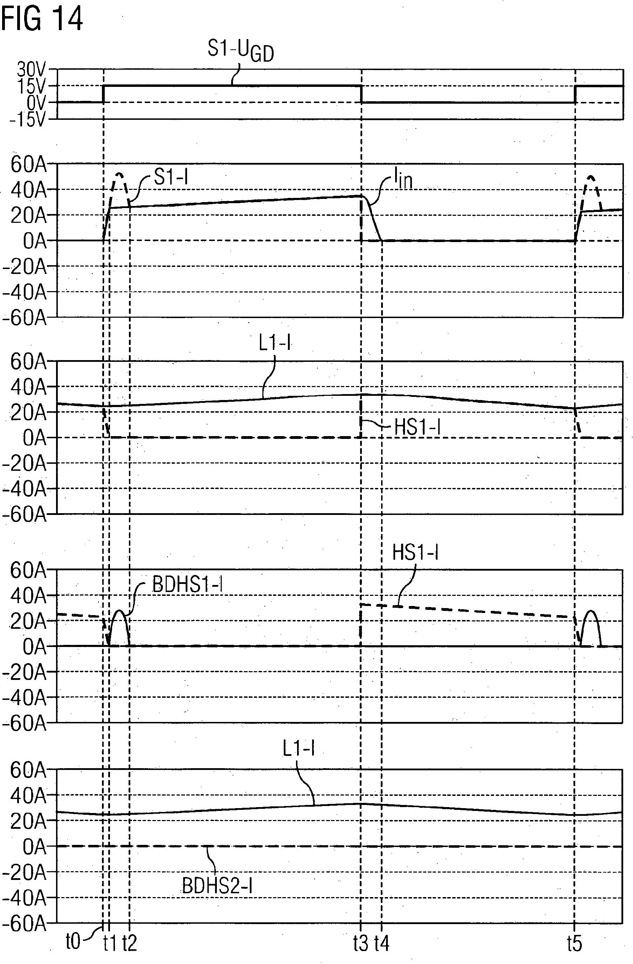

In Fig. 14 ist schließlich von oben nach unten ein Diagramm mit dem Strom S1-I durch den ersten Halbleiterschalter S1 und mit dem Eingangsstrom $I_{in}$ über der Zeit, ein Diagramm mit dem Strom L1-I in der ersten Speicherdrossel L1 (Ausgangsstrom) und dem Strom HS1-I durch den ersten Hilfshalbleiterschalter HS1 über der Zeit, ein Diagramm mit dem Strom BDHS1-I durch die parasitären Diode des ersten Hilfshalbleiterschalters HS1 und mit dem Strom HS1-I durch den ersten Hilfshalbleiterschalter HS1 über der Zeit sowie ein Diagramm mit dem Strom BDSH2-I durch die parasitären Diode des zweiten Hilfshalbleiterschalters HS2 und mit dem Strom L1-I in der ersten Speicherdrossel L1 über der Zeit.

Die oben beschriebene Absenkung des Freilaufstromes D1-I auf Null ist in Fig. 13 im ersten Zeitabschnitt t0-t1, welcher auf den Zeitachsen der Figuren 12 bis 14 markiert ist, eingezeichnet.

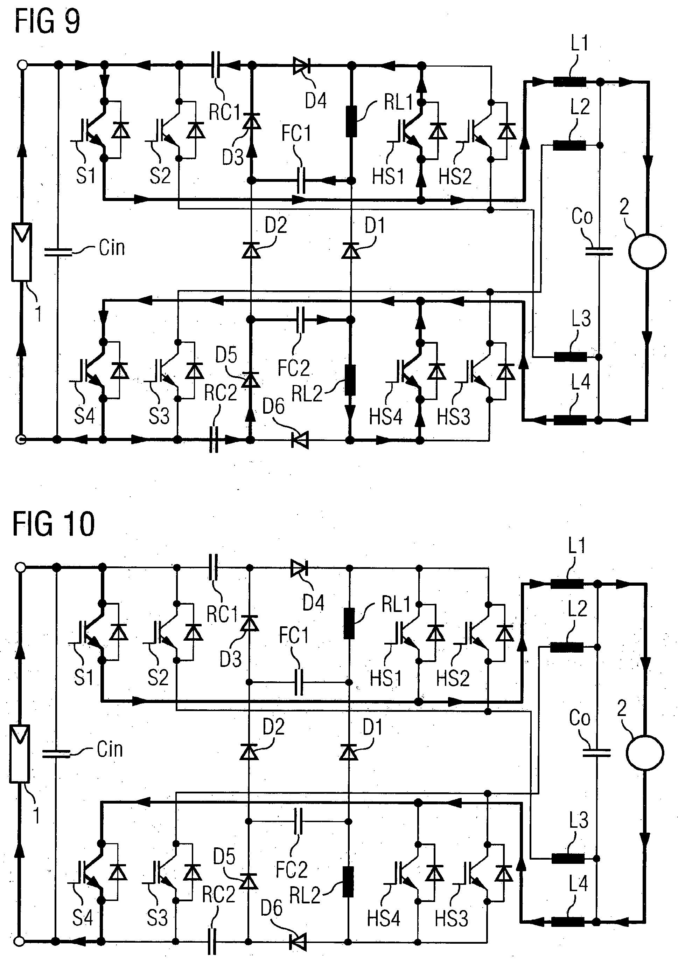

In einem darauffolgenden zweiten Zeitabschnitt t1-t2 (Fig. 9, Fig. 12-14) dreht sich die Stromrichtung durch die Resonanzdrosseln RL1, RL2 um. Das geschieht, sobald die Resonanzdrosseln RL1, RL2 keine Energie mehr gespeichert haben. Der Strom fließt dann einerseits über den ersten Freilaufkondensatore FC1 und die dritte Diode D3 in den ersten Resonanzkondensator RC1 und andererseits über den zweiten Resonanzkondensator RC2 und die fünfte Diode D5 in den zweiten Freilaufkondensator FC2. Die Resonanzkondensatoren RC1, RC2 werden dabei entladen und die Energie in den Induktivitäten RL1, RL2 steigt wieder, sodass eine Schwingung erfolgen kann.

Die Ladung des ersten Resonanzkondensators RC1 schwingt mit einer Halbperiode der Resonanzfrequenz auf den ersten Freilaufkondensator FC1. Dies geschieht durch einen Stromfluss über den ersten Halbleiterschalter S1, die parasitäre Diode des ersten Hilfshalbleiterschalters HS1, die erste Resonanzdrossel RL1 und die dritte Diode D3.

Ebenso schwingt die Ladung des zweiten Resonanzkondensators RC2 mit einer Halbperiode der Resonanzfrequenz auf den zweiten Freilaufkondensator FC2, wobei hierbei der Strom über den vierten Halbleiterschalter S4, die fünfte Diode D5, die zweite Resonanzdrossel RL2 und die parasitäre Diode des vierten Hilfshalbleiterschalter HS4 fließt.

Wie in Fig. 13 dargestellt schaltet die erste Freilaufdiode D1 mit Nullspannung aus und die dritte sowie die fünfte Diode D3, D5 werden mit Nullspannung eingeschaltet. An diesen Dioden geht demnach keine Verlustleistung verloren.

Im anschließenden dritten Zeitabschnitt t2-t3 (Fig. 10, Fig. 12-14) sind die Ladungen der Resonanzkondensatoren RC1, RC2 vollständig auf die Freilaufkondensatoren FC1, FC2 umgeladen. Die dritte Diode D3 schaltet ebenso wie die fünfte Diode D5 mit Nullstrom ab und verhindert eine weitere Schwingung in den Resonanzkreisen RC1, FC1, RL1 bzw. RC2, FC2, RL2. Der Strom aus der Energiequelle 1 fließt weiter in der ersten und vierten Speicherdrossel L1, L4 über den ersten und vierten Halbleiterschalter S1, S4.

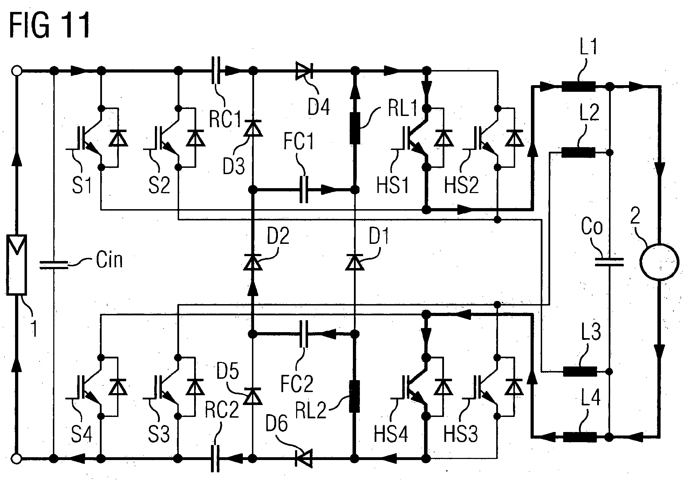

Zu Beginn des vierten Zeitabschnitts t3-t4 (Fig. 11, Fig. 12-14) werden der erste und der vierte Halbleiterschalter S1, S4 mittels einer entsprechenden Steuerung (z.B. nach dem Pulsbreitenmodulationsverfahren) ausgeschaltet. Der Strom aus der Energiequelle 1 fließt weiter über einen Parallelzweig, nämlich über die Resonanzkondensatoren RC1, RC2, über die vierte und sechste Diode D4, D6 und über den ersten und vierten Hilfshalbleiterschalter HS1, HS4. Dabei werden die Resonanzkondensatoren RC1, RC2 sehr rasch vom Strom in den Speicherdrosseln L1, L4 aufgeladen.

Gleichzeitig geben die Freilaufkondensatoren FC1, FC2 ihre Ladung über die zweite Freilaufdiode D2, die Resonanzdrosseln RL1, RL2, den ersten und den vierten Hilfshalbleiterschalter HS1, HS4 und die Speicherdrosseln L1, L4 an das angeschlossene Netz 2 ab. Die Freilaufkondensatoren FC1, FC2 werden dabei völlig entladen. Dadurch sinkt die Spannung kontinuierlich zwischen dem Kollektor des ersten Hilfshalbleiterschalters HS1 und dem Emmiter des vierten Hilfshalbleiterschalters HS4 entsprechend der Ladungszunahme in den Resonanzkondensatoren RC1, RC2 und der Ladungsabnahme in den Freilaufkondensatoren FC1, FC2 auf nahezu Null ab. Im anschließenden fünften Zeitabschnitt t4-t5 (Fig. 7, Fig. 12-14) übernimmt wieder die erste Freilaufdiode D1 den Freilaufstrom.

Zu Beginn dieses fünften Zeitabschnitts t4-t5 sind die Resonanzkondensatoren RC1, RC2 völlig aufgeladen und der Strom aus der Energiequelle 1 geht auf Null. Zugleich sind die beiden Freilaufkondensatoren FC1, FC2 völlig entladen. Die zweite Freilaufdiode D2 schaltet bei Nüllspannung aus und die erste Freilaufdiode D1 schaltet bei Nullspannung ein. Der Freilaufstrom kommutiert also bei Nullspannung von der zweiten D2 zur ersten Freilaufdiode D1, ohne dass dabei eine Verlustleistung entsteht. In weiterer Folge fließt der von den großen Speicherdrosseln L1, L4 getriebene Freilaufstrom über die Resonanzkondensatoren RL1, RL2 und die erste Freilaufdiode bis zum nächsten Einschaltzeitpunkt t5=t0.

Für eine negative Halbwelle gilt die gleiche Beschreibungssequenz mit dem zweiten und dem dritten Halbleiterschalter S2, S3 als taktende Schalter und mit dem zweiten und dritten Hilfshalbleiterschalter HS2, HS3 als eingeschaltete Schalter des Freilaufs. Dabei fließt der Strom durch die zweite und die dritte Speicherdrossel L2, L3.

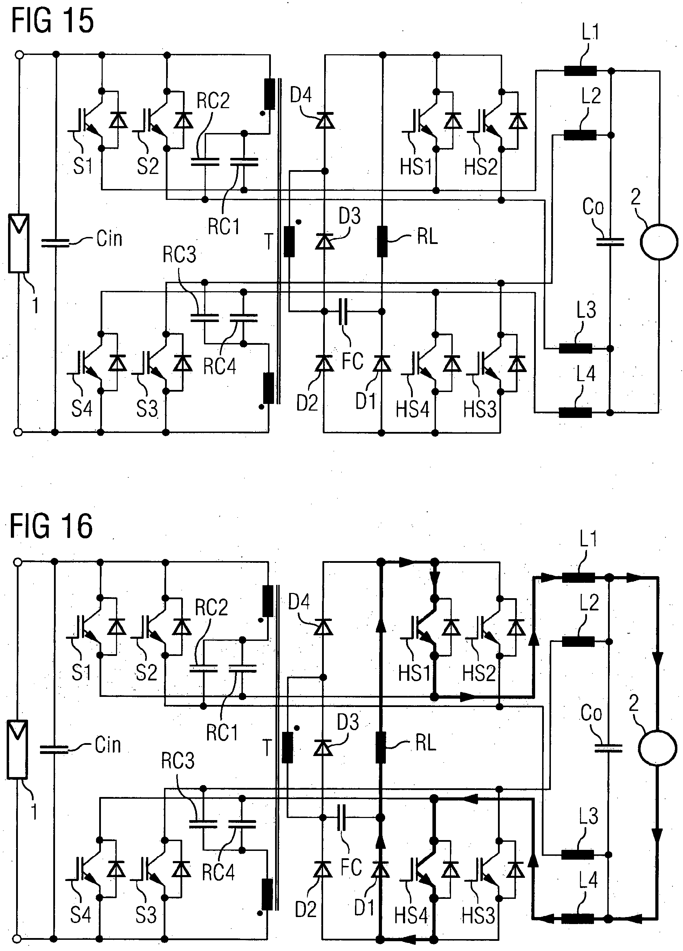

Eine alternative Ausführungsform ist in Fig. 15 dargestellt. Ausgehend von einer Grundschaltung gemäß Fig. 2 ist hierbei eine Resonanzschaltung mit einem Transformator T als Koppelelement vorgesehen. Dazu ist zunächst in Serie mit der ersten Freilaufdiode D1 eine Resonanzdrossel RL geschaltet. Parallel zur ersten Freilaufdiode D1 ist die zweite Freilaufdiode D2 in Reihe mit einem Freilaufkondensator FC angeordnet. Ein Verbindungspunkt zwischen zweiter Freilaufdiode D2 und Freilaufkondensator ist über eine dritte und eine vierte Diode D3, D4 an die Brückenverbindung zwischen erstem und zweitem Hilfshalbleiterschalter HS1, HS2 geschaltet. Dabei ist parallel zur dritten Diode eine Sekundärwicklung des Transformators T angeordnet, wobei der Wicklungsanfang der Sekundärwicklung mit der Kathode der dritten Diode D3 und der Anode der vierten Diode D4 verbunden ist. Das Wicklungsende ist mit der Kathode der zweiten Freilaufdiode D2 und einer Seite des Freilaufkondensators FC verbunden.

Zudem sind am Transformator T zwei gegengleich zur Sekundärwicklung gewickelte Primärwicklungen angebracht. Die erste Primärwicklung ist mit dem Wicklungsanfang einerseits über einen ersten Resonanzkondensator RC1 mit einer Verbindung zwischen erstem Halbleiterschalter S1 und erster Speicherdrossel L1 und andererseits über einen zweiten Resonanzkondensator RC2 mit einer Verbindung zwischen zweitem Halbleiterschalter S2 und dritte Speicherdrossel L3 verbunden. Das Wicklungsende der ersten Primärwicklung ist an die Brückenverbindung zwischen erstem und zweitem Halbleiterschalter S1, S2 angeschaltet.

In der gleichen Weise ist der Wicklungsanfang der zweiten Primärwicklung an die Brückenverbindung zwischen drittem und viertem Halbleiterschalter 53, S4 angeschaltet und das Wicklungsende der zweiten Primärwicklung ist einerseits über einen dritten Resonanzkondensator RC3 mit einer Verbindung zwischen drittem Halbleiterschalter S3 und zweiter Speicherdrossel L2 und andererseits über einen vierten Resonanzkondensator RC4 mit einer Verbindung zwischen viertem Halbleiterschalter S4 und vierter Speicherdrossel L4 verbunden.

Die Figuren 16 bis 20 zeigen die Stromflüsse während eines Taktzykluses in den zuvor definierten Zeitabschnitten t0-t1, t1-t2, t2-t3, t3-t4 und t4-t5 während einer positiven Halbwelle.

Kurz vor dem Einschalten des ersten und des vierten Halbleiterschalters S1, S4 fließt der Freilaufstrom der ersten und vierten Speicherdrossel L1, L4 über das Netz, durch den ersten und vierten Hilfshalbleiterschalter, die erste Freilaufdiode D1 sowie die Resonanzdrossel RL (Fig. 16).

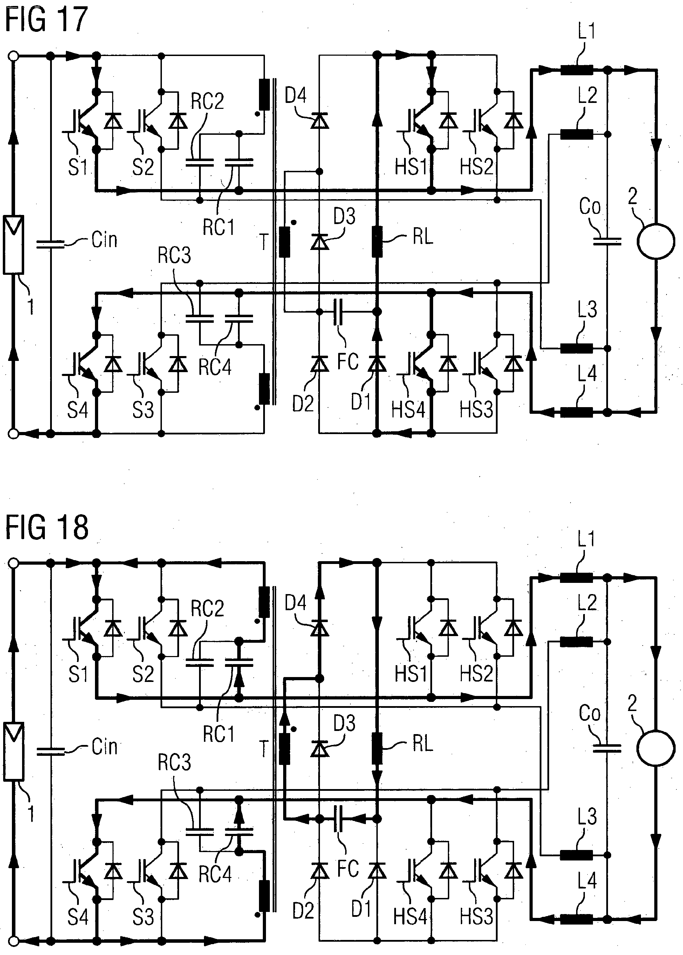

Im ersten Zeitabschnitt t0-t1 nach Einschalten des ersten und des vierten Halbleiterschalters S1, S4 beginnt der Strom aus der Energiequelle 1 zu fließen (Fig. 17).

Während des anschließenden zweiten Zeitabschnitts t1-t2 werden die Ladungen des zweiten und des vierten Resonanzkondensators RC1, RC4 über den Transformator T, die Resonanzdrossel RL und die vierte Diode D4 auf den Freilaufkondensator FC umgeladen (Fig. 18).

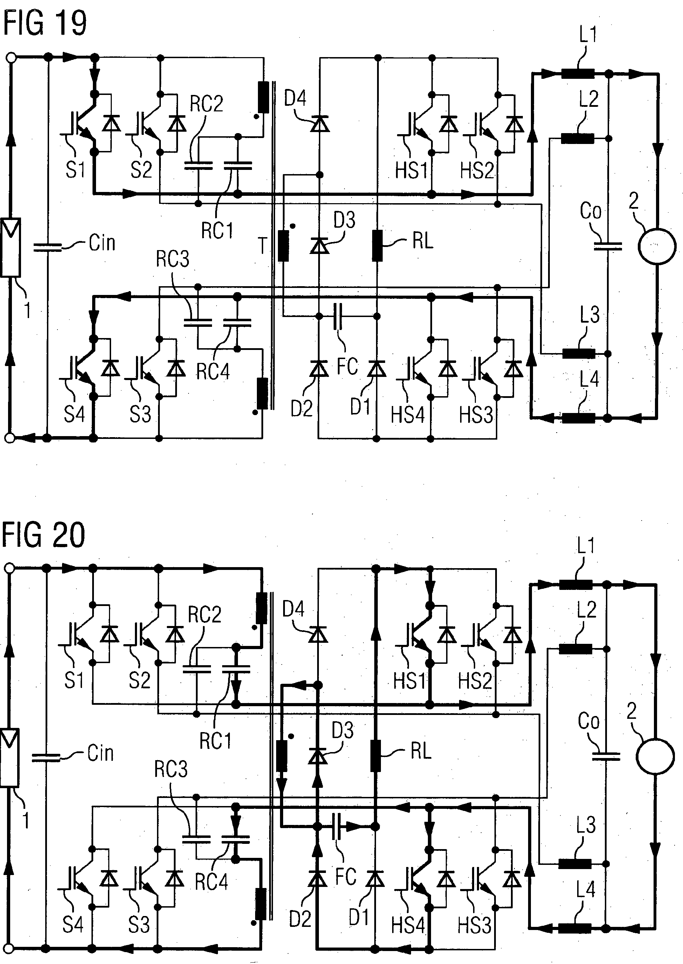

Im dritten Zeitabschnitt t2-t3 fließt der Strom aus der Energiequelle 1 über den ersten und den vierten Halbleiterschalter S1, S4 sowie die erste und die vierte Speicherdrossel L1, L4 ins angeschlossene Netz 2 (Fig. 19). Dieser Zeitabschnitt t2-t3 wird mit dem Abschalten des ersten und des vierten Halbleiterschalters S1, S4 beendet.

Der damit eingeleitete vierte Zeitabschnitt t3-t4 ist in Fig. 20 dargestellt. Dabei fließt weiterhin Strom aus der Energiequelle 1 über den ersten und den vierten Resonanzkondensator RC1, RC4 sowie den Transformator T, welcher sich in einer Flussphase befindet, da die sekundärseitig angeordnete dritte Diode D3 leitend ist. Dies geschieht so lange, bis die die beiden Resonanzkondensatoren RC1, RC4 aufgeladen sind.

Gleichzeitig gibt der Freilaufkondensator FC seine Ladung über die zweite Freilaufdiode D2, die Resonanzdrossel RL sowie den ersten und den zweiten Hilfshalbleiterschalter HS1, HS4 ans Netz 2 ab. Am Ende dieses Zeitabschnitts t3-t4 sind die beiden Resonanzkondensatoren RC1, RC4 völlig aufgeladen und der Strom aus der Energiequelle 1 geht auf Null. Gleichzeitig ist der Freilaufkondensator FC völlig entladen und der Freilaufstrom kommutiert bei Nullspannung von der zweiten Freilaufdiode D2 zur ersten Freilaufdiode D1.

Im folgenden fünften Zeitabschnitt t4-t5 fließt der Freilaufstrom der ersten und der vierte Speicherdrossel L1, L4 über die erste Freilaufdiode D1, die Resonanzdrossel RL sowie den ersten und den vierten Hilfshalbleiterschalter HS1, HS4, bis der erste und der vierte Halbleiterschalter S1, S4 wieder einschalten.

Während einer negativen Halbwelle laufen die gleichen Vorgänge ab, wobei hierbei der zweite und der dritte Halbleiterschalter S2, S3 takten, der zweite und der dritte Resonanzkondensator RC2, RC3 aktiv sind und der zweite und der dritte Hilfshalbleiterschalter HS2, HS3 dauerhaft eingeschaltet sind.

Die gezeigten Ausführungsformen der Erfindung haben den Vorteil, dass alle beteiligten Schaltbauteile (Halbleiterschalter und Dioden) entweder bei Nullspannung oder bei Nullstrom ein oder ausgeschaltet werden. Auf diese Weise werden die Schaltverluste des Wechselrichters auf ein Minimum reduziert.

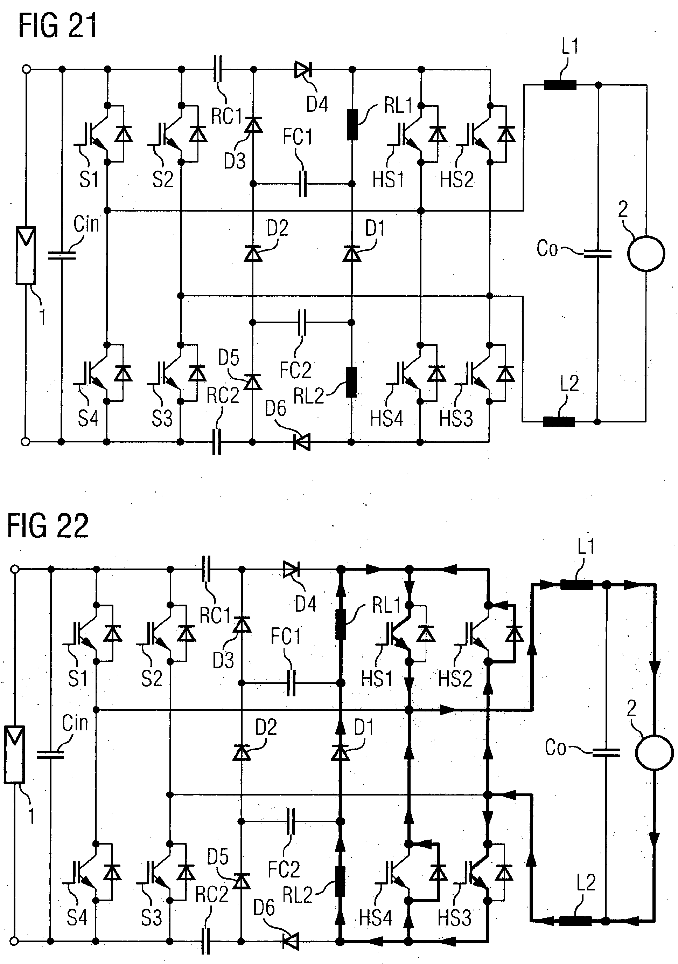

Wenn die Freilaufdioden kleine Schaltverluste aufweisen und die Halbleiterschalter mit erheblichen Schaltverlusten behaftet sind, wie dies bei IGBTs der Fall ist, kann das Konzept vereinfacht werden, indem nur zwei Speicherdrosseln L1, L2 anstatt der bisher beschriebenen vier Speicherdrosseln L1-L4 am Ausgang des Wechselrichters angeordnet sind. Die entsprechende Schaltung ist in Fig. 21 dargestellt.

Gegenüber der Schaltung in Fig. 1 ist sind hierbei in der H-Brücke der erste und der vierte Halbleiterschalter S1, S4 miteinander verbunden. Ebenso sind der zweite und der dritte Halbleiterschalter S2, S3 miteinander verbunden. Diese Verbindungen sind über jeweils eine Speicherdrossel L1, L2 an die Wechselspannungsausgänge geschaltet. Parallel dazu ist die weitere H-Brücke für den Freilauf angeordnet, wobei auch hier der erste und der vierte Hilfshalbleiterschalter HS1, HS4 sowie der zweite und der dritte Hilfshalbleiterschalter HS2, HS3 miteinander verbunden sind.

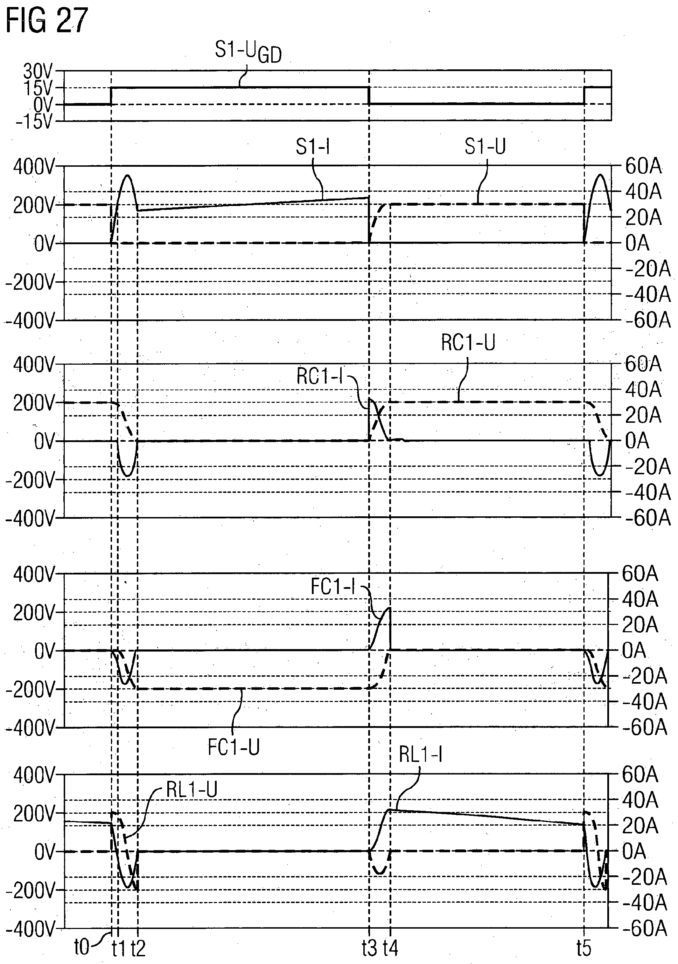

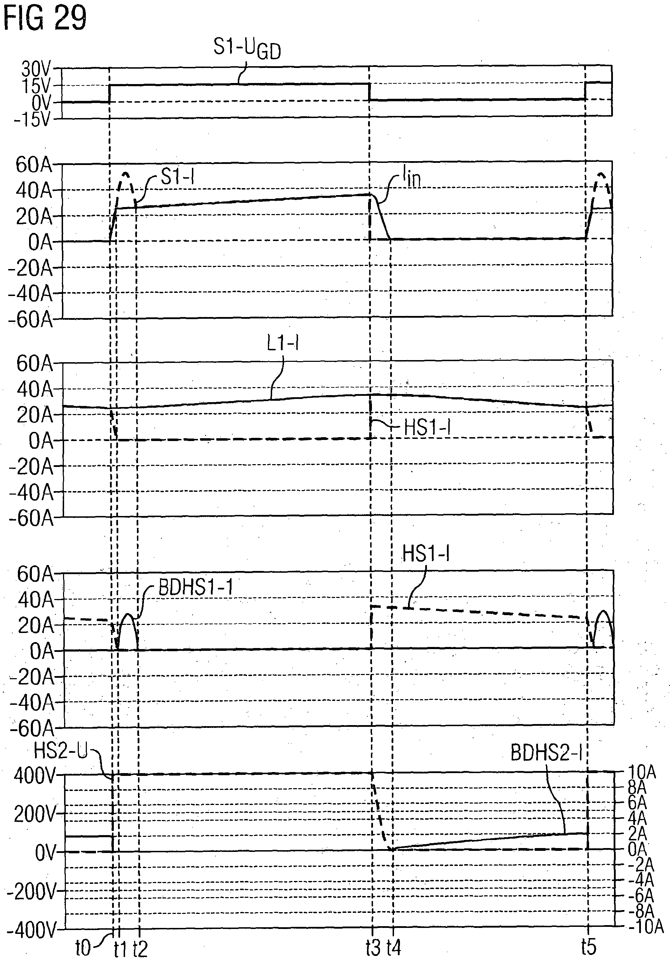

Die Verläufe der Spannungen und Ströme zeigen die Figuren 27-29, wobei die Darstellungsform jener in den Figuren 12-14 entspricht.

Die allgemeinen Schaltbedingungen einer derartigen Schaltung lauten wie folgt. Während einer positiven Halbwelle takten der erste und der dritte Halbleiterschalters S1, S3 mit der Taktfrequenz, während der zweite und der vierte Halbleiterschalter S2, S4 dauerhaft ausgeschaltet bleiben. Der erste und der dritte Hilfshalbleiterschalter HS1, HS3 sind während einer positiven Halbwelle immer eingeschaltet, wohingegen der zweite und der vierte Hilfshalbleiterschalter HS2, HS4 entweder ausgeschaltet sind oder invertierend zu den Halbleiterschaltern S1, S3 takten.

Während einer negativen Halbwelle takten der zweite und der vierte Halbleiterschalter S2, S4 und der erste und der dritte Halbleiterschalter S1, S3 bleiben ausgeschaltet. Der erste und der dritte Hilfshalbleiterschalter HS1, HS3 sind entweder ausgeschaltet oder takten invertierend zu den Halbleiterschaltern S1, S3. Der zweite und der vierte Hilfshalbleiterschalter HS2, HS4 sind während einer negativen Halbwelle immer eingeschaltet.

Nachfolgend ist wieder eine Abfolge der definierten Zeitabschnitte t0-t1, t1-t2, t2-t3, t3-t4 und t4-t5 während einer positiven Halbwelle anhand von Schaltbildern (Fig. 22-26) und anhand von Diagrammen (Fig. 27-29) beschrieben. Die Anordnung der Resonanzschaltung mit zwei Resonanzkondensatoren RC1, RC2, zwei Resonanzdrosseln RL1, RL2, zwei Freilaufkondensatoren RC1, RC2, einer ersten und einer zweiten Freilaufdiode D1, D2 sowie einer dritten, vierten, fünften und sechsten Diode D3, D4, D5, D6 entspricht dabei der in Fig. 1 dargestellten.

Am Ende einer Freilaufphase kurz vor dem Einschalten ist der Feilaufstrom auf die erste Freilaufdiode D1 und die antiparallelen oder parasitären Dioden des zweiten und des vierten Hilfshalbleiterschalters HS2, HS4 aufgeteilt (Fig. 22, Fig. 27-29).

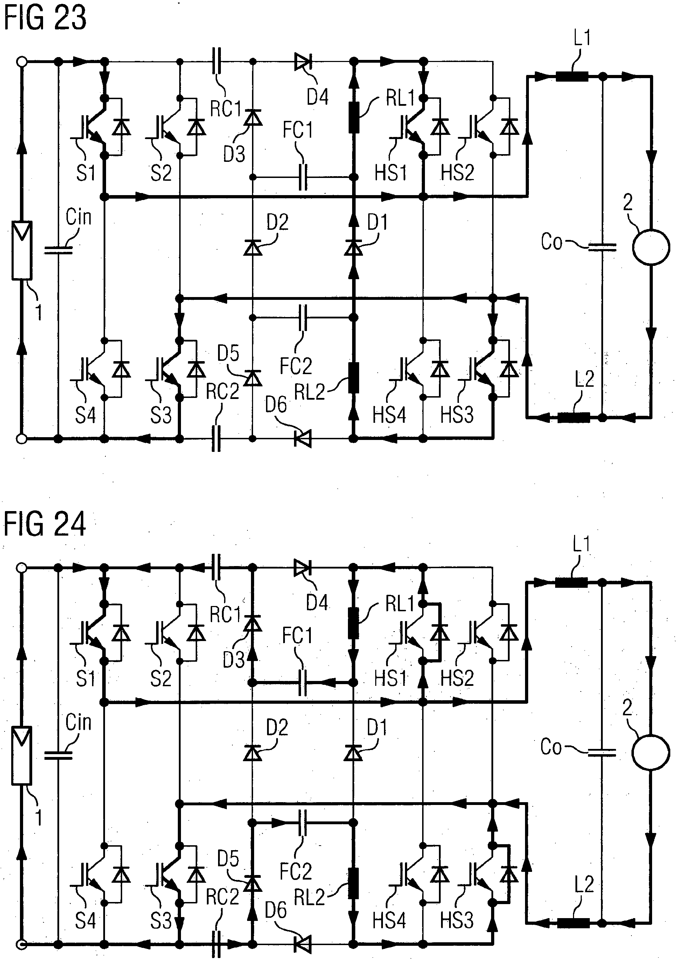

Während des ersten Zeitabschnitts t0-t1 nach dem Einschalten des ersten und des dritten Halbleiterschalters S1, S3 fließt Strom aus der Energiequelle 1 über diese Halbleiterschalter S1, S3 und die beiden Speicherdrosseln L1, L2 ins angeschlossene Netz 2. So wie in den zuvor beschriebenen Ausführungsformen geht der Freilaufstrom über die erste Freilaufdiode und die beiden Resonanzdrosseln RL1, RL2 auf Null (Fig. 23, Fig. 27-29).

In der gleichen Weise wie zuvor schwingt während des nächsten Zeitabschnitts t1-t2 die Ladung des ersten Resonanzkondensators RC1 mit einer Halbperiode der Resonanzfrequenz über den ersten Halbleiterschalter S1, die parasitäre Diode des ersten Hilfshalbleiterschalters HS1, die erste Resonanzdrossel RL1 sowie die dritte Diode D3 auf den ersten Freilaufkondensator FC1. Analog dazu erfolgt die Umladung des zweiten Resonanzkondensators RC2 auf den zweiten Freilaufkondensator FC2 über die fünfte Diode D5, die zweite Resonanzdrossel RL2, die parasitäre Diode des dritten Hilfshalbleiterschalters HS3 sowie den dritten Halbleiterschalter S3 (Fig. 24, Fig. 27-29).

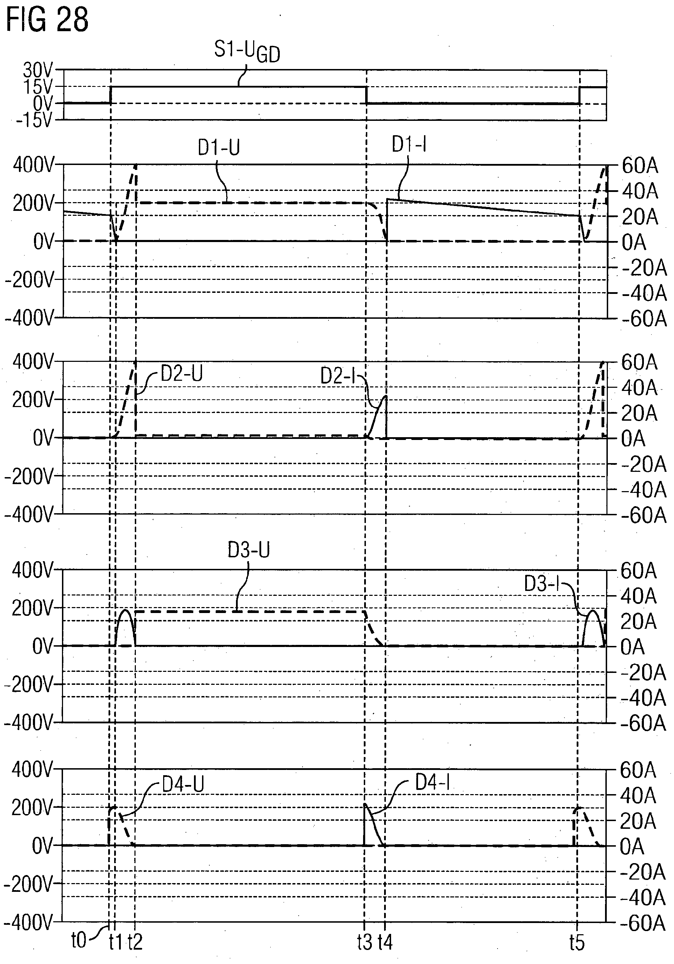

Wie in Fig. 28 dargestellt werden dabei die erste Freilaufdiode bei Nullspannung ausgeschaltet und die dritte und fünfte Diode D3, D5 bei Nullspannung eingeschaltet.

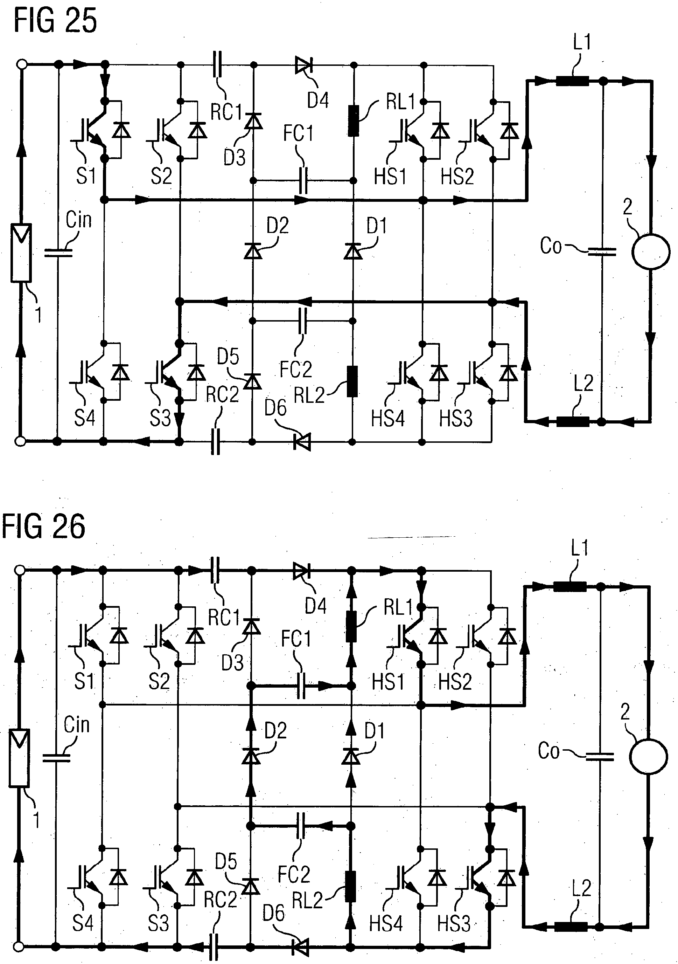

Im nächsten Zeitabschnitt t2-t3 sind die Ladungen der Resonanzkondensatoren RC1, RC2 völlig auf die Freilaufkondensatoren FC1, FC2 umgeladen und die dritte und fünfte Diode D3, D5 schalten bei Nullstrom ab. Dies verhindert ein Weiterschwingen der Resonanzkreise RC1, FC1, RL1 bzw. RC2, FC2, RL2. Der Strom aus der Energiequelle 1 fließt über die eingeschalteten Halbleiterschalter S1, S3 und die Speicherdrosseln L1, L2 ins Netz 2 (Fig. 25, Fig. 27-29)

Der Beginn des vierten Zeitabschnitts t3-t4 ist durch das Abschalten des ersten und dritten Halbleiterschalters S1, S3 markiert. Der Strom aus der Energiequelle 1 fließt weiter durch die Resonanzkondensatoren RC1 bzw. RC2, über die vierte Diode D4 bzw. die sechste Diode D6 und den ersten Hilfshalbleiterschalter HS1 bzw. den dritten Hilfshalbleiterschalter HS3, bis die beiden Resonanzkondensatoren RC1, RC2 aufgeladen sind.

Gleichzeitig geben die Freischaltkondensatoren FC1, FC2 solange ihre Ladung über die zweite Freilaufdiode D2, den ersten und den dritten Hilfshalbleiterschalter HS1, HS3 und die Resonanzdrosseln RL1, RL2 sowie die Spulendrosseln L1, L2 ans Netz ab, bis sie völlig entladen sind (Fig. 26, Fig. 27-29)

Zu Beginn des fünften Zeitabschnitts t4-t5 sind die Resonanzkondensatoren völlig aufgeladen und der Strom aus der Energiequelle 1 geht auf Null. Gleichzeitig sind die Freilaufkondensatoren völlig entladen und der Freilaufstrom kommutiert bei Nullspannung von der zweiten Freilaufdiode D2 auf die erste Freilaufdiode D1 sowie die parallel geschalteten parasitären oder antiparallelen Dioden des zweiten und des vierten Hilfshalbleiterschalters HS2, HS4.

Im Folgenden fließt der Freilaufstrom aufgeteilt auf die erste Freilaufdiode D1 und die parallel geschalteten parasitären oder antiparallelen Dioden des zweiten und des vierten Hilfshalbleiterschalters HS2, HS4, bis der nächste Einschaltvorgang erfolgt (Fig. 22, Fig. 27-29).

Die Abfolge während einer negativen Halbwelle erfolgt in gleicher Weise, wobei hierbei der zweite und der vierte Halbleiterschalter S2, S4 taktet und der zweite sowie der vierte Hilfshalbleiterschalter HS2, HS4 eingeschaltet sind.

Eine weitere Ausführungsform der vorliegenden Erfindung bezieht sich auf einen Wechselrichter mit einem Netztransformator zur galvanischen Trennung der eingangsseitig angeschlossenen Energiequelle 1 und des ausgangsseitig angeschlossenen Wechselspannungsnetzes 2.

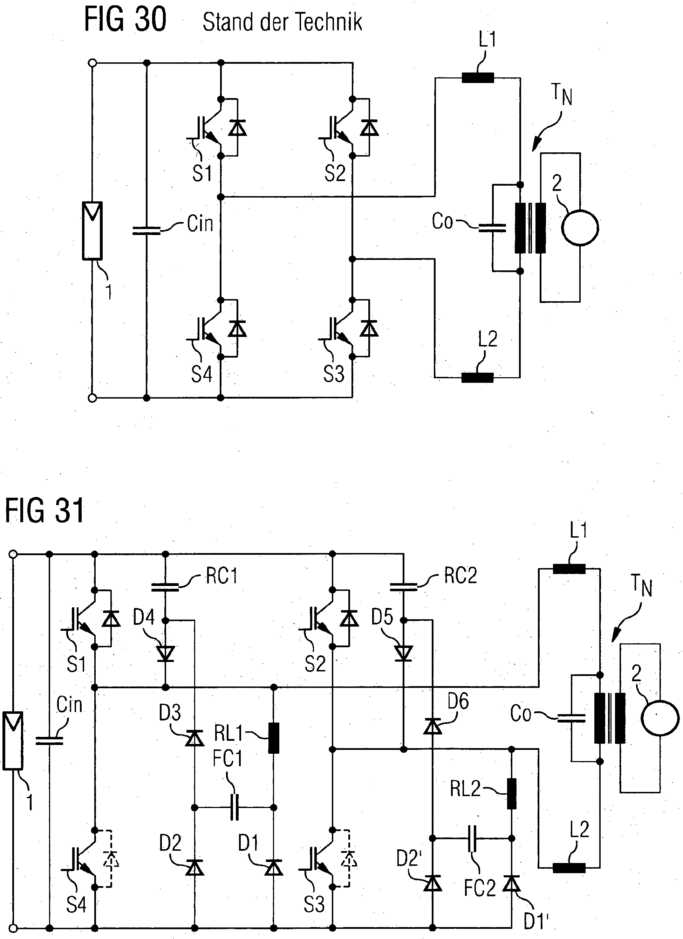

Eine H-Brücke mit vier Halbleiterschaltern S1, S2, S3, S4 ist dabei wie bekannt eingangsseitig an die Energiequelle 1 und ausgangsseitig über zwei Speicherdrosseln L1, L2 an eine Primärwicklung eines Netztransformators $T_N$ angeschlossen. Eingangsseitig ist gegebenenfalls ein Eingangskondensator Cin und parallel zur Primärwicklung ein Ausgangskondensator Co angeordnet. Über eine Sekundärwicklung des Netztransformators $T_N$ erfolgt der Anschluss an das Netz 2 (Fig. 30).

Bei einer derartigen Ausführungsform werden die mit der Taktfrequenz taktenden Halbleiterschalter unsymmetrisch geschaltet. So sind während einer positiven Halbwelle der zweite und der vierte Halbleiterschalter S2, S4 immer ausgeschaltet, der dritte Halbleiterschalter S3 ist immer eingeschaltet und der erste Halbleiterschalter S1 taktet.

Das dabei auftretende einseitige Springen des Zwischenkreises ist aufgrund der Potenzialtrennung des Netztransformators vernachlässigbar. Bei transformatorlosen Wechselrichtern muss die H-Brücke hingegen immer symmetrisch getaktet werden, da sonst mit der Taktfrequenz Spannungssprünge der Energiequelle 1 gegen Erde auftreten würden. Das ist insbesondere bei Solargeneratoren zu vermeiden, um nicht die Lebensdauer der Solargenerator-Isolation zu verkürzen oder massive EMV-Probleme hervorzurufen. Des Weiteren wären beträchtliche Schaltverluste, ausgehende von der Umladung der Solargenerator-Erde-Kapazität, die Folge.

Nach Abschaltung des taktenden Halbleiterschalters S1 fließt der Freilaufstrom über die antiparallele oder parasitäre Diode des vierten Halbleiterschalters S4 und den eingeschalteten dritten Halbleiterschalter S3.

Während einer negativen Halbwelle taktet der zweite Halbleiterschalter S2, der vierte Halbleiterschalter S4 bleibt immer eingeschaltet und der erste sowie der dritte Hableiterschalter S1, S3 bleiben immer ausgeschaltet. Der Freilaufstrom fließt hier über die antiparallele oder parasitäre Diode des dritten Halbleiterschalters S3 und über den eingeschalteten vierten Halbleiterschalter S4.

Alternativ dazu können während beider Halbwellen die dauerhaft eingeschalteten Halbleiterschalter S3 bzw. S4 und die taktenden Halbleiterschalter S1 bzw. S2 vertauscht angesteuert werden. Demnach kann während einer positiven Halbwelle auch der dritte Halbleiterschalter S3 takten und der erste Halbeiterschalter S1 dauerhaft eingeschaltet sein. Während einer negativen Halbwelle kann der vierte Halbleiterschalter S4 takten und der zweite Halbleiterschalter S2 eingeschaltet sein.

In Fig. 31 ist die Ausführung der Resonanzschaltung für einen Wechselrichter mit Netztransformator dargestellt.

Für den ersten Halbleiteschalter S1 bilden eine erste Freilaufdiode D1, eine dritte und vierte Diode D3, D4, ein erster Freilaufkondensator FC1, ein erster Resonanzkondensator RC1 sowie eine erste Freilaufdrossel RL1 einen ersten Schwingkreis. Die erste Freilaufdiode D1 ersetzt dabei die antiparallele oder parasitäre Diode des vierten Halbleiterschalters S4 in Fig. 30.

Die erste Freilaufdiode D1 ist mit ihrer Anode an die Brückenverbindung zwischen drittem und viertem Halbleiterschalter S3, S4 angeschaltet. Die Kathode ist über die erste Resonanzdrossel RL1 mit der Brückenverbindung des ersten und des vierten Halbleiterschalters S1, S4 verbunden. Parallel zur ersten Freilaufdiode D1 ist eine zweite Freilaufdiode D2 in Serie mit dem ersten Freilaufkondensator FC1 geschaltet. Die Brückenverbindung des ersten und zweiten Halbleiterschalters S1, S2 ist über den ersten Resonanzkondensator RC1 an die Anode der vierten Diode D4 geschaltet, deren Kathode mit der Brückenverbindung des ersten und vierten Halbleiterschalters S1, S4 verbunden ist. Ein Verbindungspunkt zwischen ersten Resonanzkondensator RC1 und vierter Diode D4 ist mit der Kathode der dritten Diode D3 verbunden, deren Anode.mit einem Verbindungspunkt zwischen zweiter Freilaufdiode D2 und erstem Freilaufkondensator FC1 verbunden ist.

Für den zweiten Halbleiterschalter S2 bilden eine weitere erste Freilaufdiode D1', eine fünfte und sechste Diode D5, D6, ein zweiter Freilaufkondensator FC2, ein zweiter Resonanzkondensator RC2 sowie eine zweite Resonanzdrossel RL2 einen Schwingkreis. Dieser Schwingkreis ist in der oben beschriebenen Weise zwischen die Brückenverbindung des zweiten und dritten Halbleiterschalters S2, S3 und die Brückenverbindung des dritten und vierten Halbleiterschalters S3, S4 angeordnet, wobei parallel zur weiteren ersten Feilaufdiode D1' eine weitere zweite Freilaufdiode D2' in Serie mit dem zweiten Freilaufkondensator FC2 vorgesehen ist.

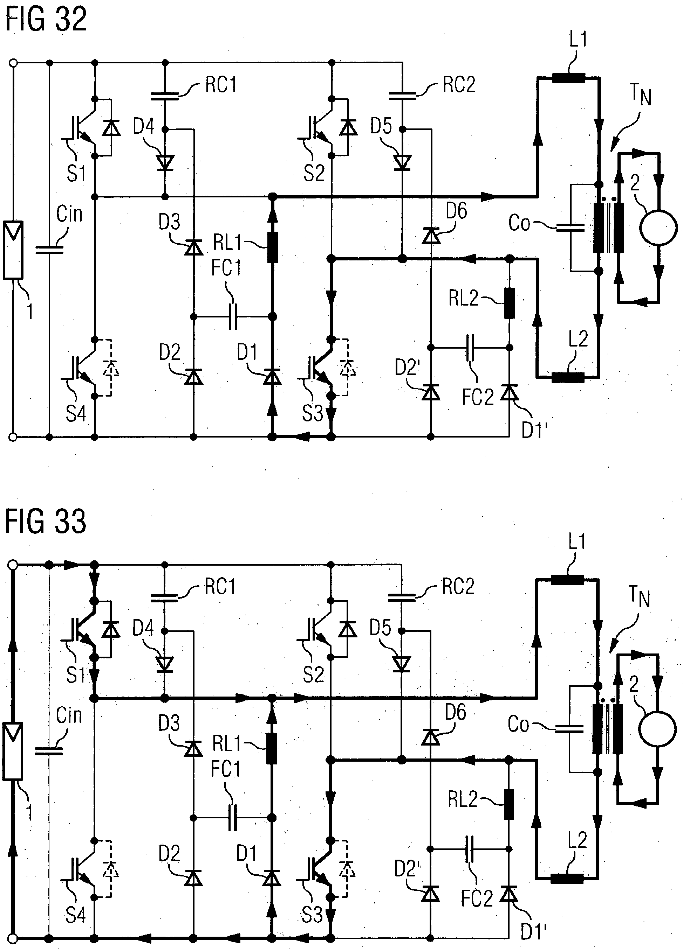

In den Figuren 32-36 sind die Stromflüsse des Resonanzschaltverhaltens während einer positiven Halbwelle in den zuvor definierten Zeitabschnitten t0-t1, t1-t2, t2-t3, t3-t4 und t4-t5 dargestellt.

Kurz vor einem Einschalten des ersten Halbeiterschalters S1 fließt der Freilaufstrom in den Speicherdrosseln L1, L2 durch die erste Feilaufdiode D1, über den dritten Halbleiterschalter S3, die erste Resonanzdrossel RL1 sowie über den Netztransformator $T_N$ (Fig. 32).

Der erste Zeitabschnitt t0-t1 (Fig. 33) beginnt mit dem Einschalten des ersten Halbleiterschalters S1. Der Strom aus der Energiequelle 1 fließt durch den ersten Halbleiterschalter S1, durch die Speicherdrosseln L1, L2, sowie die Primärwicklung des Netztransformators $T_N$ und über den dritten Halbleiterschalter S3. Dabei wird auch der erste Resonanzkreis RC1, RL1, FC1 zugeschaltet, der mit folgender Resonanzfrequenz $\omega_0$ zu schwingen beginnt:

$$\omega_0{}^2 \ = \ 1/(((RC1*FC1)/(RC1+FC1))*RL1)$$

Dadurch geht der Freilaufstrom in der ersten Freilaufdiode D1 über die erste Resonanzdrossel RL1 auf Null.

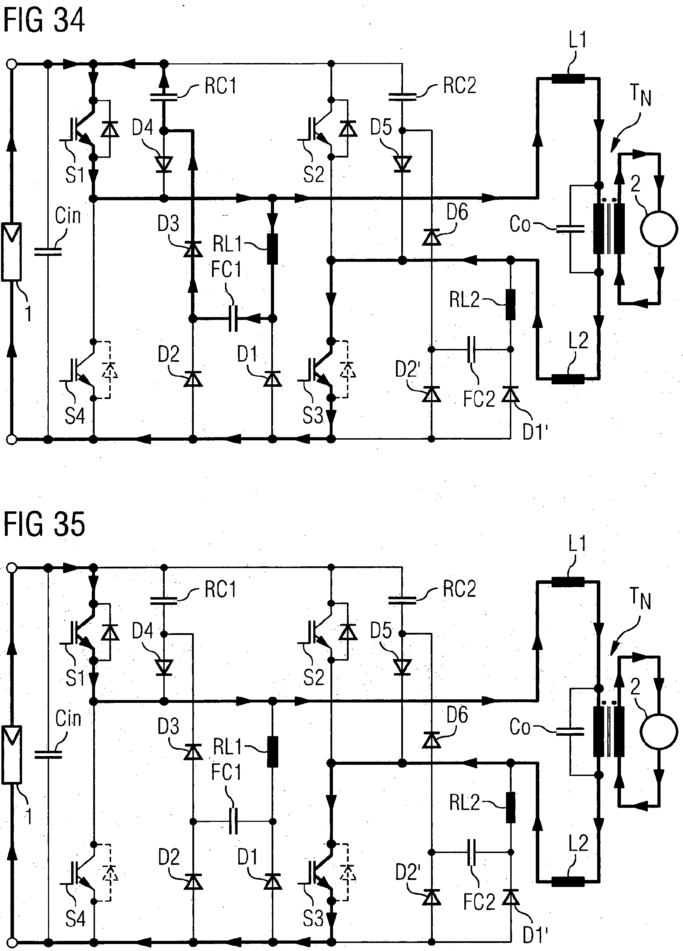

Im darauffolgenden Zeitabschnitt t1-t2 (Fig. 34) schwingt die Ladung des ersten Resonanzkondensators RC1 mit einer Halbperiode der Resonanzfrequenz auf den ersten Freilaufkondensator FC1 über. Der Stromfluss verläuft dabei durch den ersten Halbleiterschalter S1, die erste Resonanzdrossel RL1 und über die dritte Diode D3.

Zu Beginn des dritten Zeitabschnitts t2-t3 (Fig. 35) ist die Ladung des ersten Resonanzkondensators RC1 völlig auf den ersten Freilaufkondensator FC1 umgeladen und die dritte Diode D3 schaltet mit Nullstrom ab. Dadurch wird ein Weiterschwingen im Resonanzkreis RC1, FC1, RL1 verhindert. Der Strom aus der Energiequelle 1 fließt weiter durch den ersten und dritten Halbleiterschalter S1, S3, die Speichedrosseln L1, L2 sowie die Primärwicklung des Netztransformators $T_N$.

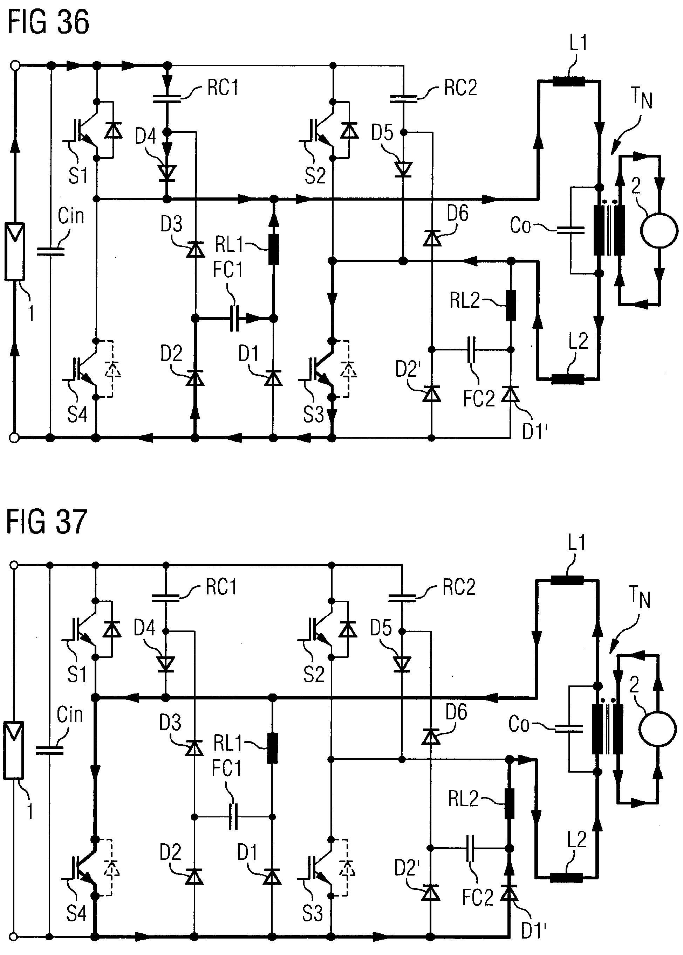

Der vierte Zeitabschnitt t3-t4 (Fig. 36) beginnt mit dem Abschalten des ersten Halbleiterschalters S1. Der dritte Halbleiterschalter S3 bleibt eingeschaltet. Durch ihn fließt der Strom weiter aus der Energiequelle 1 durch den ersten Resonanzkondensator RC1, die vierte Diode D4, über die Speicherdrosseln L1, L2, und den Netztransformator $T_N$, bis der erste Resonanzkondensator RC1 aufgeladen ist.

Gleichzeitig gibt der ersten Freilaufkondensator FC1 seine Ladung über die erste Resonanzdrossel RL1, die Speicherdrosseln L1, L2, den Netztransformator $T_N$, den dritten Halbleiterschalter S3 und die zweite Freilaufdiode D2 an das Netz 2 ab, bis der erste Freilaufkondensator FC1 völlig entladen ist.

Zu Beginn des letzten Zeitabschnitts t4-t5 (Fig. 32) ist der erste Resonanzkondensator RC1 völlig aufgeladen und der Strom aus der Energiequelle 1 geht auf Null. Gleichzeitig ist der erste Freilaufkondensator FC1 völlig entladen und der Freilaufstrom kommutiert bei Nullspannung von der zweiten Freilaufdiode D2 auf die erste Freilaufdiode D1. In weiterer Folge fließt der Freilaufstrom der Speicherdrosseln L1, L2 durch die erste Freilaufdiode D1, über den dritten Halbleiterschalter S3, die erste Resonanzdrossel RL1 sowie die Primärwicklung des Netztransformators $T_N$, bis der erste Halbleiterschalter S1 wieder eingeschaltet wird.

In den Figuren 37-41 ist ein entsprechender Ablauf für einen Taktzyklus während einer negativen Halbwelle dargestellt. Kurz vor dem Einschaltzeitpunkt t0 fließt der Freilaufstrom der Speicherdrosseln L1, L2 durch die Primärwicklung, den vierten Halbleiterschalter S4, die weitere erste Freilaufdiode D1' und die zweite Resonanzdrossel RL2.

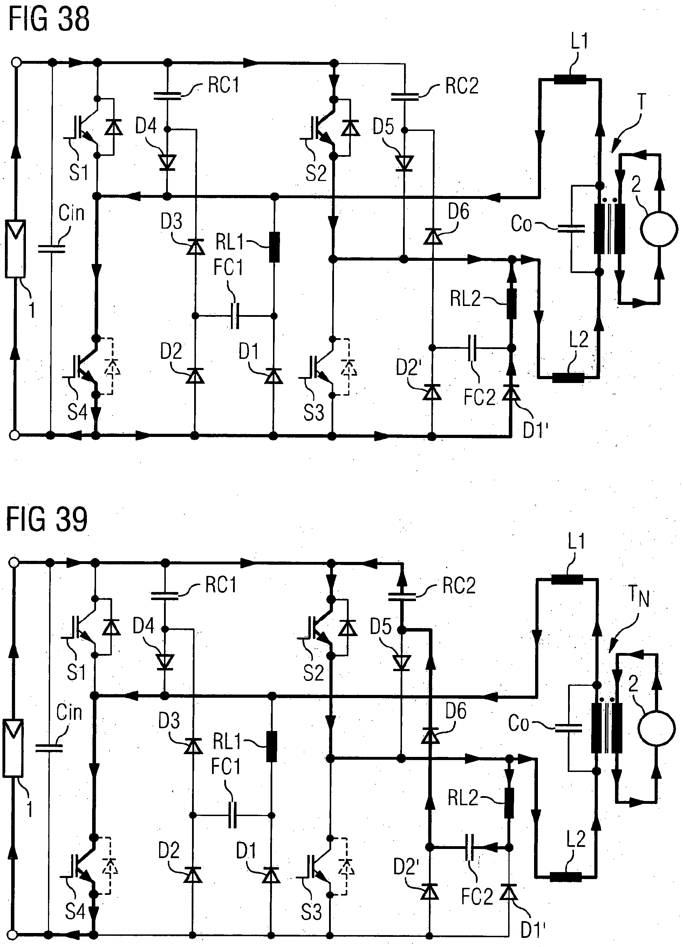

Zu Beginn des ersten Zeitabschnitts t0-t1 (Fig. 38) wird der zweite Halbleiterschalter S2 eingeschaltet und der Strom aus der Energiequelle 1 fließt über diesen durch die Speicherdrosseln L1, L2, die Primärwicklung sowie über den dauerhaft eingeschalteten vierten Halbleiterschalter S4. Zudem wird ein zweiter Resonanzkreis RC2, RL2, FC2 zugeschaltet, der mit folgender Resonanzfrequenz $\omega_0$ zu schwingen beginnt:

$$\omega_0{}^2 \ = \ 1/(((RC2*FC2)/(RC2+FC2))*RL2)$$

Dadurch geht der Freilaufstrom in der weiteren ersten Freilaufdiode D1' über die zweite Resonanzdrossel RL2 auf Null.

Im nachfolgen zweiten Zeitabschnitt t1-t2 (Fig. 39) schwingt die Ladung des zweiten Resonanzkondensators RC2 mit einer Halbperiode der Resonanzfrequenz auf den zweiten Freilaufkondensator FC2 über. Der Stromfluss verläuft dabei über die sechste Diode D6, den zweite Halbleiterschalter S2 und die zweite Resonanzdrossel RL2.

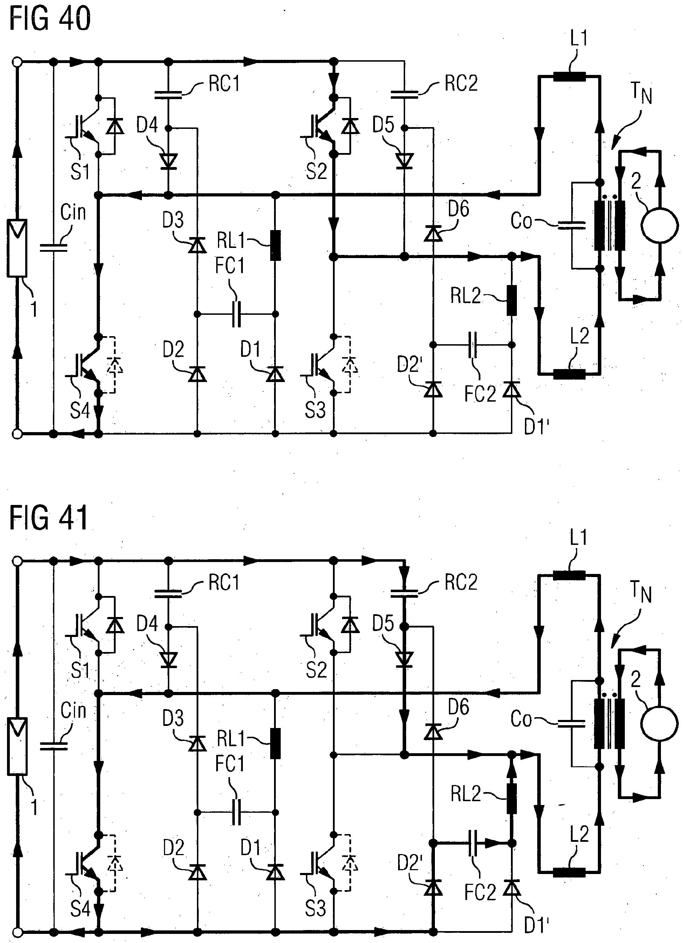

Zu Beginn des dritten Zeitabschnitts t2-t3 (Fig. 40) ist die Ladung des zweiten Resonanzkondensators RC2 völlig auf den zweiten Freilaufkondensator FC2 umgeladen. Die sechste Diode D6 schaltet mit Nullstrom ab und verhindert ein Weiterschwingen des Resonanzkreises RC2, RL2, FC2. Der Strom aus der Energiequelle 1 fließt weiter über den zweiten und vierten Halbleiterschalter S2, S4, die Speicherdrosseln L1, L2 und die Primärwicklung.

Der vierte Zeitabschnitt t3-t4 (Fig. 41) beginnt mit dem Ausschalten des zweiten Halbleitschalters S2. Der vierte Halbeiterschalter S4 bleibt eingeschaltet und über ihn fließt der Strom weiter aus der Energiequelle 1 durch den zweiten Resonanzkondensator RC2, über die fünfte Diode D5, die Speicherspulen L1, L2 und die Primärwicklung, bis der zweite Resonanzkondensator RC2 aufgeladen ist.

Gleichzeitig gibt der zweite Freilaufkondensator FC2 seine Ladung über die zweite Resonanzdrossel RL2, den Netztransformator $T_N$, die Speicherspulen L1, L2, den vierten Halbleiterschalter S4 und die weitere zweite Freilaufdiode D2' an das Netz 2 ab, bis der zweite Freilaufkondensator FC2 völlig entladen ist.

Zu Beginn des fünften Zeitabschnitts t4-t5 (Fig. 37) ist der zweite Resonanzkondensator RC2 völlig aufgeladen und der Strom aus der Energiequelle 1 geht auf Null. Gleichzeitig ist der zweite Freilaufkondensator FC2 völlig entladen und der Freilaufstrom kommutiert bei Nullspannung von der weiteren zweiten Freilaufdiode D2' auf die weitere erste Freilaufdiode D1'. In weiterer Folge fließt der Freilaufstrom der beiden Speicherdrosseln L1, L2 über die Primärwicklung, den vierte Halbleiterschalter S4, die weitere erste Freilaufdiode D1' und die zweite Resonanzdrossel RL2.

Die Elemente der beschriebenen Resonanzkreise sind so zu dimensionieren, dass die entsprechende Resonanzfrequenz höher als die vorgegebene Taktfrequenz ist. Dabei soll die Dauer einer Halbperiode mit Resonanzfrequenz kürzer sein als die von einer Steuerung vorgegebene kürzest mögliche Einschaltzeit des taktenden Halbleiterschalters bzw. der taktenden Halbleiterschalter.

**Patentansprüche**

1. Wechselrichter zur Umwandlung einer eingangsseitigen Gleichspannung in eine ausgangsseitige Wechselspannung, eine H-Brücke mit vier Halbleiterschaltern (S1, S2, S3, S4) umfassend, wobei zumindest ein Halbleiterschalter (S1, S2, S3, S4) taktet, wobei des Weiteren zwischen der H-Brücke und ausgangsseitigen Wechselspannungsanschlüssen eine Speieherdrosselschaltung (L1, L2) vorgesehen ist und wobei die Speicherdrosselschaltung (L1, L2) einen Freilaufpfad mit einer Feilaufdiode (D1) zur Kommutierung des Stromes nach einem Abschaltvorgang eines Halbleiterschalters (S1, S2, S3, S4) der H-Brücke umfasst, wobei jeder taktende Halbleiterschalter (S1, S2, S3, S4) an eine Resonanzschaltung gekoppelt ist, welche kapazitive Resonanzelemente (RC1, RC2, RC3, RC4, FC, FC1, FC2) und induktive Resonanzelemente (RL, RL1, RL2) umfasst, dadurch gekennzeichet dass der Freilaufpfad eine erste und eine zweite Freilaufdiode (D1, D1', D2, D2') in Parallelschaltung umfasst, dass diese Parallelschaltung in Serie mit den induktiven Resonanzelementen (RL, RL1, RL2) geschaltet ist und dass die zweite Freilaufdiode (D2, D2') mit kapazitiven Freilaufelementen (FC, FC1, FC2) in Serie geschaltet ist, welche als Elemente der Resonanzschaltung zu Beginn einer Freilaufphase auf eine Spannung aufgeladen sind, sodass an der zweiten Freilaufdiode (D2, D2') keine Spannung anliegt.

2. Wechselrichter nach Anspruch 1, **dadurch gekennzeichnet, dass** jede Resonanzschaltung einen Resonanzkondensator (RC1, RC2, RC3, RC4) und eine Resonanzdrossel (RL, RL1, RL2) umfasst, dass ein Freilaufkondensator (FC, FC1, FC2) über Koppelelemente mit einem Resonanzkondensator (RC1, RC2, RC3, RC4) verbunden ist und dass ein erster Zweig des Freilaufpfads die ersten Freilaufdiode (D1, D1') und die Resonanzdrossel (RL1, RL2) in Serienschaltung umfasst und dass ein zweiter Zweig des Freilaufpfads die zweite Feilaufdiode (D2, D2'), die Resonanzdrossel (RL, RL1, RL2) und den Freilaufkondensator (FC, FC1, FC2) in Serienschaltung umfasst.

3. Wechselrichter nach Anspruch 1 oder 2, **dadurch gekennzeichnet, dass** der erste Halbleiterschalter (31) der H-Brücke über eine erste Speicherdrossel (L1) und der dritte Halbleiterschalter (S3) der H-Brücke über eine zweite Speicherdrossel (L2) mit einem ersten Wechselspannungsanschluss verbunden sind und dass der zweite Halbleiterschalter (S2) der H-Brücke über eine dritte Speicherdrossel (L3) und der vierte Halbleiterschalter (S4) der H-Brücke über eine vierte Speicherdrossel (L4) mit einem zweiten Wechselsparnungsanschluss verbunden sind und dass des Weiteren der Freilaufpfad eine weitere H-Brücke mit vier Hilfshalbleiterschaltern (HS1, HS2, HS3, HS4) umfasst, dass der erste Hilfshalbleiterschalter (HS1) der weiteren H-Brücke über die erste Speicherdrossel (L1) und der dritte Hilfshalbleiterschalter (HS3) der weiteren H-Brücke über die zweite Speicherdrossel (L2) mit dem ersten Wechselspannungsanschluss verbunden sind und dass der zweite Hilfshalbleiterschalter (HS2) der weiteren H-Brücke über die dritte Speicherdrossel (L3) und der vierte Hilfshalbleiterschalter (HS4) der weiteren H-Brücke über die vierte Speicherdrossel (L4) mit dem zweiten Wechselspannungsanschluss verbunden sind.

4. Wechselrichter nach Anspruch 3, **dadurch gekennzeichnet, dass** die Verbindung des dritten und des vierten Hilfshalbleiterschalters (HS3, HS4) und die Verbindung des ersten und des zweiten Hilfshalbleiterschalters (HS1, HS2) über eine Serienschaltung aus erster Freilaufdiode (D1) und einer Resonanzdrossel (RL) verbunden sind, dass parallel zur ersten Freilaufdiode (D1) eine Serienschaltung aus zweiter Freilaufdiode (D2) und Freilaufkondensator (FC) angeordnet ist, dass des Weiteren ein Verbindungspunkt zwischen zweiter Feilaufdiode (D2) und Freilaufkondensator (FC) über eine Serienschaltung aus einer dritten Diode (D3) und einer vierten Diode (D4) mit der Verbindung des ersten und des zweiten Hilfshalbleiterschalters (HS1, HS2) verbunden ist, dass parallel zur dritten Diode (D3) eine Sekundärwicklung eines Transformators (T) angeordnet ist, welcher zudem zwei Primärwicklungen umfasst, wobei die erste Primärwicklung mit einem Ende an die Verbindung des ersten und des zweiten Halbleiterschalters (S1, S2) der H-Brücke angeschaltet ist und mit dem anderen Ende über einen ersten Resonanzkondensator (RC1) an die Verbindung zwischen erstem Halbleiterschalter (S1) und erster Speicherdrossel (L1) sowie über einen zweite Resonanzkondensator (RC2) an die Verbindung zwischen zweitem Halbleiterschalter (S2) und dritter Speicherdrossel (L3) angeschaltet ist und wobei die zweite Primärwicklung mit einem Ende an die Verbindung des dritten und des vierten Halbleiterschalters (S3, S4) der H-Brücke angeschaltet ist und mit dem anderen Ende über einen dritten Resonanzkondensator (RC3) an die Verbindung zwischen dritten Halbleiterschalter (S3) und zweiter Speicherdrossel (L2) sowie über einen vierten Resonanzkondensator (RC4) an die Verbindung zwischen vierten Halbleiterschalter (S4) und vierter Speicherdrossel (L4) angeschaltet ist.

5. Wechselrichter nach Anspruch 1 oder 2, **dadurch gekennzeichnet, dass** die eine Hälfte der H-Brücke über eine erste Speicherdrossel (L1) mit einem ersten Wechselspannungsanschluss verbunden ist und dass die andere Hälfte der H-Brücke über eine zweite Speicherdrossel (L2) mit einem zweite Wechselspannungsanschluss verbunden ist und dass des Weiteren der Freilaufpfad eine weitere H-Brücke mit vier Hilfshalbleitersehaltern (HS1, HS2, HS3, HS4) umfasst, wobei die eine Hälfte der weiteren H-Brücke über die erste Speicherdrossel (L1) an den ersten Wechselspannungsanschluss geschaltet ist und die andere Hälfte der weiteren H-Brücke über die zweite Speicherdrossel (L2) an den zweiten Weichselspannungsanschluss geschaltet ist.

6. Wechselrichter nach Anspruch 3 oder 5, **dadurch gekennzeichnet, dass** die Verbindung des dritten und des vierten Hilfshalbleiterschalters (HS3, HS4) und die Verbindung des ersten und des zweiten Hilfshalbleiterschalters (HS1, HS2) über eine Serienschaltung aus einer zweite Resonanzdrossel (RL2), der ersten Freilaufdiode (D1) und einer ersten Resonanzdrossel (RL1) verbunden sind, dass parallel zur ersten Freilaufdiode (D1) eine Serienschaltung aus einem zweitem Freilaufkondensator (FC2), der zweiten Feilaufdiode (D2) und einem ersten Freilaufkondensator (FC1) angeordnet ist, dass des Weiteren ein Verbindungspunkt zwischen zweiter Freilaufdiode (D2) und erstem Freilaufkondensator (FC1) über eine Serienschaltung aus einer dritten Diode (D3) und einer vierten Diode (D4) mit der Verbindung des ersten und des zweiten Hilfshalbleiterschalters (HS1, HS2) verbunden ist, dass die Verbindung des dritten und des vierten Hilfshalbleiterschalters (HS3, HS4) über eine sechste Diode (D6) und eine fünfte Diode (D5) mit einem Verbindungspunkt zwischen zweiter Freilaufdiode (D2) und zweitem Freilaufkondensator (FC2) verbunden ist, dass ein Verbindungspunkt zwischen dritter und vierter Diode (D3, D4) über einen ersten Resonanzkondensator (RC1) mit der Verbindung des ersten Halbleiterschalters (S1) und des zweiten Halbleiterschalters (S2) verbunden ist und dass ein Verbindungspunkt zwischen fünfter und sechster Diode (D5, D6) über einen zweiten Resonanzkondensator (RC2) mit der Verbindung des dritten Halbleiterschalters (s3) und des vierten Halbleiterschalters (S4) verbunden ist.

7. Wechselrichter nach Anspruch 1 oder 2, **dadurch gekennzeichnet, dass** ein erster H-Brückenanschluss zwischen erstem Halbleiterschalter (S1) und viertem Halbleiterschalter (S4) über eine erste Speicherdrossel (L1) mit einem ersten Wechselspannungsanschluss verbunden ist und dass ein zweiter H-Brückenanschluss zwischen zweitem Halbleiterschalter (S2) und drittem Halbleiterschalter (S3) über eine zweite Speicherdrossel (L2) mit einem zweiten Wechselspannungsanschluss verbunden ist und dass die Wechselspannungsanschlüsse über eine Primärwicklung eines Netztransformators ($T_N$) miteinander verbunden sind, dass des Weiteren die Verbindung des dritten und des vierten Halbleiterschalters (S3, S4) über eine Serienschaltung aus erster Freilaufdiode (D1) und erster Resonanzdrossel (RL1) mit dem ersten H-Brückenanschluss verbunden sind, dass parallel zur ersten Feilaufdiode (D1) eine Serienschaltung aus zweiter Freilaufdiode (D2) und erstem Freilaufkondensator (FC1) angeordnet ist, dass parallel zum ersten Halbleiterschalter (S1) eine Serienschaltung aus einem ersten Resonanzkondensator (RC1) und einer vierten Diode (D4) angeordnet ist und dass ein Verbindungspunkt zwischen zweiter Freilaufdiode (D2) und erstem Freilaufkondensator (FC1) über eine dritte Diode (D3) mit einem Verbindungspunkt zwischen erstem Resonanzkondensator (RC1) und vierter Diode (D4) verbunden ist, dass des Weiteren die Verbindung des dritten und des vierten Halbleiterschalters (S3, S4) über eine Serienschaltung aus einer weiteren ersten Freilaufdiode (D1') und zweiten Resonanzdrossel (RL2) mit dem zweiten H-Brückenanschluss verbunden sind, dass parallel zur weiteren ersten Feilaufdiode (D1') eine Serienschaltung aus einer weiteren zweiten Freilaufdiode (D2') und einem zweiten Freilaufkondensator (FC2) angeordnet ist, dass parallel zum zweite Halbleiterschalter (S2) eine Serienschaltung aus einem zweiten.Resonanzkondensator (RC2) und einer fünften Diode (D5) angeordnet ist und dass ein Verbindungspunkt zwischen weiterer zweiter Freilaufdiode (D2') und dem zweite Freilaufkondensator (FC2) über eine sechste Diode (D6) mit einem Verbindungspunkt zwischen zweitem Resonanzkondensator (RC2) und fünfter Diode (D5) verbunden ist.

8. Wechselrichter nach einem der Ansprüche 1 bis 7, **dadurch gekennzeichnet, dass** die Gleichspannungsanschlüsse über einen Eingangskondensator (Cin) miteinander verbunden sind.

9. Wechselrichter nach einem der Ansprüche 1 bis 8, **dadurch gekennzeichnet, dass** die Wechselspannungsartschlüsse über einen Ausgangskondensator (Co) miteinander verbunden sind.

**10.** Verfahren zum Betreiben eines Wechselrichtern nach einem der Ansprüche 1 bis 2, **dadurch gekennzeichnet, dass** zu Beginn eines Taktzykluses wenigstens ein Halbleiterschalter (S1, S2, S3, S4) der H-Brücke eingeschaltet wird, dass dabei die eingangsseitige Gleichspannung auf die induktiven Resonanzelemente (RL, RL1, RL2) der Resonanzschaltung gezogen wird, wodurch der noch als Freilaufstrom durch die induktiven Resonanzelemente (RL, RL1, RL2) fließende Strom abnimmt und seine Richtung umkehrt und dass in weiterer Folge mittels dieses Stromes Energie von kapazitiven Resonanzelementen (RC1, RC2, RC3, RC4) auf kapazitive Freilaufelemente (FC, FC1, FC2) übertragen wird, dass nach Ablauf einer vorgegeben Einschaltzeit der zumindest eine taktende Halbleiterschalter (S1, S2, S3, S4) wieder abgeschaltet wird und zumindest ein Teil des Freilaufstromes durch die zweite Freilaufdiode (D2, D2'), die kapazitiven Freilaufelemente (FC, FC1, FC2) und die induktiven Resonanzelemente (RL1, RL2) fließt, bis die kapazitiven Freilaufelemente (FC, FC1, FC2) entladen sind und der restliche Freilaufstrom durch die erste Freilaufdiode (D1, D1') und die induktiven Resonanzelemente (RL1, RL2) fließt.

**Claims**

**1.** Inverter for converting a DC input voltage to an AC output voltage, comprising an H-bridge having four semiconductor switches (S1, S2, S3, S4), wherein at least one semiconductor switch (S1, S2, S3, S4) is in switching mode, wherein a storage choke circuit (L1, L2) is additionally disposed between the H-bridge and output-side AC voltage terminals, said choke circuit (L1, L2) comprising a freewheeling path with a freewheeling diode (D1) for commutating the current after a turn-off process of a semiconductor switch (S1, S2, S3, S4) of the H-bridge, wherein each switching semiconductor switch (S1, S2, S3, S4) is coupled to a resonant circuit comprising capacitive resonant elements (RC1, RC2, RC3, RC4, FC, FC1, FC2) and inductive resonant elements (RL, RL1, RL2), **characterised in that** the freewheeling path comprises a first and a second freewheeling diode (D1, D1', D2, D2') connected in parallel, **in that** this parallel circuit is connected in series with the inductive resonant elements (RL, RL1, RL2) and **in that** the second freewheeling diode (D2, D2') is connected in series with capacitive freewheeling elements (FC, FC1, FC2) which are charged to a voltage at the start of a freewheeling phase as elements of the resonant circuit, so that no voltage is applied at the second freewheeling diode (D2, D2').

**2.** Inverter according to claim 1, **characterised in that** each resonant circuit comprises a resonant capacitor (RC1, RC2, RC3, RC4) and a resonant choke (RL, RL1, RL2), **in that** a freewheeling capacitor (FC, FC1, FC2) is connected to a resonant capacitor (RC1, RC2, RC3, RC4) via coupling elements and **in that** a first leg of the freewheeling path comprises the first freewheeling diode (D1, D1') and the resonant choke (RL1, RL2) connected in series and **in that** a second leg of the freewheeling path comprises the second freewheeling diode (D2, D2'), the resonant choke (RL, RL1, RL2) and the freewheeling capacitor (FC, FC1, FC2) connected in series.

**3.** Inverter according to claim 1 or 2, **characterised in that** the first semiconductor switch (S1) of the H-bridge is connected via a first storage choke (L1) and the third semiconductor switch (S3) of the H-bridge is connected via a second storage choke (L2) to a first AC voltage terminal and **in that** the second semiconductor switch (S2) of the H-bridge is connected via a third storage choke (L3) and the fourth semiconductor switch (S4) of the H-bridge is connected via a fourth storage choke (L4) to a second AC voltage terminal and **in that** the freewheeling path additionally comprises another H-bridge having four auxiliary semiconductor switches (HS1, HS2, HS3, HS4), **in that** the first auxiliary semiconductor switch (HS1) of the additional H-bridge is connected via the first storage choke (L1) and the third auxiliary semiconductor switch (HS3) of the additional H-bridge is connected via the second storage choke (L2) to the first AC voltage terminal and **in that** the second auxiliary semiconductor switch (HS2) of the additional H-bridge is connected via the third storage choke (L3) and the fourth auxiliary semiconductor switch (HS4) of the additional H-bridge is connected via the fourth storage choke (L4) to the second AC voltage terminal.

**4.** Inverter according to claim 3, **characterised in that** the connection of the third and fourth auxiliary semiconductor switches (HS3, HS4) and the connection of the first and second auxiliary semiconductor switches (HS1, HS2) are connected via a series circuit comprising the first freewheeling diode (D1) and a resonant choke (RL), **in that** a series circuit comprising a second freewheeling diode (D2) and a freewheeling capacitor (FC) is disposed in parallel with the first freewheeling diode (D1), **in that** a connection point between second freewheeling diode (D2) and freewheeling capacitor (FC) is additionally connected to the connection of the first and second auxiliary semiconductor switches (HS1, HS2) via a series circuit comprising a third diode (D3) and a fourth diode (D4), **in that** there is disposed in parallel with the third diode (D3) a secondary winding of a transformer (T) which additionally comprises two primary windings, the first primary winding being connected at one end to the connection of the first and second semiconductor switches (S1, S2) of the H-bridge and at the other end via a first resonant capacitor (RC1) to the connection between first semiconductor switch (S1) and first storage choke (L1) and via a second resonant capacitor (RC2) to the connection between second semiconductor switch (S2) and third storage choke (L3), and the second primary winding being connected at one end to the connection of the third and fourth semiconductor switches (S3, S4) of the H-bridge and at the other end via a third resonant capacitor (RC3) to the connection between third semiconductor switch (S3) and second storage choke (L2) and via a fourth resonant capacitor (RC4) to the connection between fourth semiconductor switch (S4) and fourth storage choke (L4).

5.  Inverter according to claim 1 or 2, **characterised in that** one half of the H-bridge is connected via a first storage choke (L1) to a first AC voltage terminal and **in that** the other half of the H-bridge is connected via a second storage choke (L2) to a second AC voltage terminal and **in that** the freewheeling path additionally comprises another H-bridge having four auxiliary semiconductor switches (HS1, HS2, HS3, HS4), one half of the additional H-bridge being connected via the first storage choke (L1) to the first AC voltage terminal and the other half of the additional H-bridge being connected via the second storage choke (L2) to the second AC voltage terminal.

6.  Inverter according to claim 3 or 5, **characterised in that** the connection of the third and fourth auxiliary semiconductor switches (HS3, HS4) and the connection of the first and second auxiliary semiconductor switches (HS1, HS2) are connected via a series circuit comprising a second resonant choke (RL2), the first freewheeling diode (D1) and a first resonant choke (RL1), **in that** a series circuit comprising a second freewheeling capacitor (FC2), the second freewheeling diode (D2) and a first freewheeling capacitor (FC1) is disposed in parallel with the first freewheeling diode (D1), **in that** a connection point between second freewheeling diode (D2) and first freewheeling capacitor (FC1) is additionally connected via a series circuit comprising a third diode (D3) and a fourth diode (D4) to the connection of the first and second auxiliary semiconductor switches (HS1, HS2), **in that** the connection of the third and fourth auxiliary semiconductor switches (HS3, HS4) is connected via a sixth diode (D6) and a fifth diode (D5) to a connection point between second freewheeling diode (D2) and second freewheeling capacitor (FC2), **in that** a connection point between third and fourth diode (D3, D4) is connected via a first resonant capacitor (RC1) to the connection of the first semiconductor switch (S1) and second semiconductor switch (S2) and **in that** a connection point between fifth and sixth diode (D5, D6) is connected via a second resonant capacitor (RC2) to the connection of the third semiconductor switch (S3) and fourth semiconductor switch (S4).

7.  Inverter according to claim 1 or 2, **characterised in that** a first H-bridge terminal between the first semiconductor switch (S1) and the fourth semiconductor switch (S4) is connected via a first storage choke (L1) to a first AC voltage terminal and **in that** a second H-bridge terminal between the second semiconductor switch (S2) and the third semiconductor switch (S3) is connected via a second storage choke (L2) to a second AC voltage terminal and **in that** the AC voltage terminals are interconnected via a primary winding of a power transformer ($T_N$), **in that** the connection of the third and fourth semiconductor switches (S3, S4) is additionally connected via a series circuit comprising a first freewheeling diode (D1) and first resonant choke (RL1) to the first H-bridge terminal, **in that** a series circuit comprising a second freewheeling diode (D2) and first freewheeling capacitor (FC1) is disposed in parallel with the first freewheeling diode (D1), **in that** a series circuit comprising a first resonant capacitor (RC1) and a fourth diode (D4) is disposed in parallel with the first semiconductor switch (S1) and **in that** a connection point between second freewheeling diode (D2) and first freewheeling capacitor (FC1) is connected via a third diode (D3) to a connection point between first resonant capacitor (RC1) and fourth diode (D4), **in that** the connection of the third and fourth semiconductor switches (S3, S4) is additionally connected via a series circuit comprising an additional first freewheeling diode (D1') and second resonant choke (RL2) to the second H-bridge terminal, **in that** a series circuit comprising an additional second freewheeling diode (D2') and a second freewheeling capacitor (FC2) is disposed in parallel with the additional first freewheeling diode (D1'), **in that** a series circuit comprising a second resonant capacitor (RC2) and a fifth diode (D5) is disposed in parallel with the second semiconductor switch (S2) and **in that** a connection point between additional second freewheeling diode (D2') and second freewheeling capacitor (FC2) is connected via a sixth diode (D6) to a connection point between second resonant capacitor (RC2) and fifth diode (D5).

8.  Inverter according to one of claims 1 to 7, **characterised in that** the DC voltage terminals are interconnected via an input capacitor (Cin).

9.  Inverter according to one of claims 1 to 8, **characterised in that** the AC voltage terminals are interconnected via an output capacitor (Co).

10. Method for operating an inverter according to one of claims 1 to 2, **characterised in that**, at the start of a switching cycle, at least one semiconductor switch (S1, S2, S3, S4) of the H-bridge is turned on, **in that** the input-side DC voltage is pulled to the inductive resonant elements (RL, RL1, RL2) of the resonant circuit in the process, causing the current still flowing as freewheeling current through the inductive resonant elements (RL, RL1, RL2) to reduce and reverse its direction and **in that**, by means of said current, energy is then transferred from capacitive resonant elements (RC1, RC2, RC3, RC4) to capacitive freewheeling elements (FC, FC1, FC2), **in that** when a predefined ON time has elapsed, the at least one switching semiconductor switch (S1, S2, S3, S4) is turned off again and at least part of the freewheeling current flows through the second freewheeling diode (D2, D2'), the capacitive freewheeling elements (FC, FC1, FC2) and the inductive resonant elements (RL1, RL2) until the capacitive freewheeling elements (FC, FC1, FC2) have been discharged and the remaining freewheeling current flows through the first freewheeling diode (D1, D1') and the inductive resonant elements (RL1, RL2).

## Revendications

1.  Onduleur pour la transformation d'une tension continue d'entrée en une tension alternative de sortie, comportant un pont en H avec quatre commutateurs à semi-conducteurs (S1, S2, S3, S4), au moins un commutateur à semi-conducteur (S1, S2, S3, S4) effectuant le cadencement, étant prévu en outre un circuit de bobine d'accumulation (L1, L2) entre le pont en H et les connexions de tension alternative de sortie, et le circuit de bobine d'accumulation (L1, L2) comportant un chemin de roue libre avec une diode de roue libre (D1) pour la commutation du courant après un processus de coupure d'un commutateur à semi-conducteur (S1, S2, S3, S4) du pont en H, chaque commutateur à semi-conducteur (S1, S2, S3, S4) de cadencement étant couplé à un circuit de résonance, lequel comporte des éléments de résonance capacitifs (RC1, RC2, RC3, RC4, FC, FC1, FC2) et des éléments de résonance inductifs (RL, RL1, RL2), **caractérisé en ce que** le chemin de roue libre comporte une première et une deuxième diode de roue libre (D1, D1' D2, D2') connectées en circuit parallèle, **en ce que** ce circuit parallèle est connecté en série avec les éléments de résonance inductifs (RL, RL1, RL2), et **en ce que** la deuxième diode de roue libre (D2, D2') est connectée en série avec des éléments de roue libre capacitifs (FC, FC1, FC2), lesquels sont chargés en tension comme éléments du circuit de résonance au début d'une phase de roue libre, de sorte qu'aucune tension ne se trouve sur la deuxième diode de roue libre (D2, D2').

2.  Onduleur selon la revendication 1, **caractérisé en ce que** chaque circuit de résonance comporte un condensateur de résonance (RC1, RC2, RC3, RC4) et une bobine de résonance (RL, RL1, RL2), **en ce qu'**un condensateur de roue libre (FC, FC1, FC2) est relié à un condensateur de résonance (RC1, RC2, RC3, RC4) par l'intermédiaire d'éléments de couplage, et **en ce qu'**une première branche du chemin de roue libre comporte la première diode de roue libre (D1, D1') et la bobine de résonance (RL1, RL2) en circuit série, et **en ce qu'**une deuxième branche du chemin de roue libre comporte la deuxième diode de roue libre (D2, D2'), la bobine de résonance (RL, RL1, RL2), et le condensateur de roue libre (FC, FC1, FC2), en circuit série.

3.  Onduleur selon la revendication 1 ou 2, **caractérisé en ce que** le premier commutateur à semi-conducteur (S1) du pont en H, par l'intermédiaire d'une première bobine d'accumulation (L1), et le troisième commutateur à semi-conducteur (S3) du pont en H, par l'intermédiaire d'une deuxième bobine d'accumulation (L2), sont reliés à une première connexion de tension alternative, et **en ce que** le deuxième commutateur à semi-conducteur (S2) du pont en H, par l'intermédiaire d'une troisième bobine d'accumulation (L3), et le quatrième commutateur à semi-conducteur (S4) du pont en H, par l'intermédiaire d'une quatrième bobine d'accumulation (L4), sont reliés à une deuxième connexion de tension alternative, et **en ce qu'**en outre, le chemin de roue libre comporte un autre pont en H avec quatre commutateurs d'appoint à semi-conducteurs (HS1, HS2, HS3, HS4), **en ce que** le premier commutateur d'appoint à semi-conducteur (HS1) dudit autre pont en H, par l'intermédiaire de la première bobine d'accumulation (L1), et le troisième commutateur d'appoint à semi-conducteur (HS3) dudit autre pont en H, par l'intermédiaire de la deuxième bobine d'accumulation (L2), sont reliés à la première connexion de tension alternative, et **en ce que** le deuxième commutateur d'appoint à semi-conducteur (HS2) dudit autre pont en H, par l'intermédiaire de la troisième bobine d'accumulation (L3), et le quatrième commutateur d'appoint à semi-conducteur (HS4) dudit autre pont en H, par l'intermédiaire de la quatrième bobine d'accumulation (L4), sont reliés à la deuxième connexion de tension alternative.

4.  Onduleur selon la revendication 3, **caractérisé en ce que** la liaison du troisième et du quatrième commutateur d'appoint à semi-conducteur (HS3, HS4) et la liaison du premier et du deuxième commutateur d'appoint à semi-conducteur (HS1, HS2) sont reliées par l'intermédiaire d'un circuit série constitué d'une première diode de roue libre (D1) et d'une bobine de résonance (RL), **en ce qu'**en parallèle à la première diode de roue libre (D1) est disposé un circuit série constitué d'une deuxième diode de roue libre (D2) et d'un condensateur de roue libre (FC), **en ce qu'**en outre un point de liaison entre la deuxième diode de roue libre (D2) et le condensateur de roue libre (FC) est relié à la liaison du premier et du deuxième commutateur d'appoint à semi-conducteur (HS1, HS2) par l'intermédiaire d'un circuit série constitué d'une troisième diode (D3) et d'une quatrième diode (D4), **en ce qu'**en parallèle à la troisième diode (D3) est disposé un enroulement secondaire d'un transformateur (T), lequel comporte aussi deux enroulements primaires, le premier enroulement primaire étant branché par une extrémité à la liaison du premier et du deuxième commutateur à semi-conducteur (S1, S2) du pont en H, et son autre extrémité étant branchée par l'intermédiaire d'un premier condensateur de résonance (RC1) à la liaison entre le premier commutateur à semi-conducteur (S1) et la première bobine d'accumulation (L1) de même que par l'intermédiaire d'un deuxième condensateur de résonance (RC2) à la liaison entre le deuxième commutateur à semi-conducteur (S2) et la troisième bobine d'accumulation (L3), et le deuxième enroulement primaire étant branché par une extrémité à la liaison du troisième et du quatrième commutateur à semi-conducteur (S3, S4) du pont en H, et son autre extrémité étant branchée par l'intermédiaire d'un troisième condensateur de résonance (RC3) à la liaison entre le troisième commutateur à semi-conducteur (S3) et la deuxième bobine d'accumulation (L2), de même que par l'intermédiaire d'un quatrième condensateur de résonance (RC4) à la liaison entre le quatrième commutateur à semi-conducteur (S4) et la quatrième bobine d'accumulation (L4).

5. Onduleur selon la revendication 1 ou 2, **caractérisé en ce qu'**une moitié du pont en H est reliée à une première connexion de tension alternative par l'intermédiaire d'une première bobine d'accumulation (L1) et **en ce que** l'autre moitié du pont en H est reliée à une deuxième connexion de tension alternative par l'intermédiaire d'une deuxième bobine d'accumulation (L2), et **en ce qu'**en outre le chemin de roue libre comporte un autre pont en H avec quatre commutateurs d'appoint à semi-conducteurs (HS1, HS2, HS3, HS4), ladite une moitié de l'autre pont en H étant connectée par l'intermédiaire de la première bobine d'accumulation (L1) à la première connexion de tension alternative, et l'autre moitié de l'autre pont en H étant connectée par l'intermédiaire de la deuxième bobine d'accumulation (L2) à la deuxième connexion de tension alternative.

6. Onduleur selon la revendication 3 ou 5, **caractérisé en ce que** la liaison du troisième et du quatrième commutateur d'appoint à semi-conducteur (HS3, HS4) et la liaison du premier et du deuxième commutateur d'appoint à semi-conducteur (HS1, HS2) sont reliées par l'intermédiaire d'un circuit série constitué d'une deuxième bobine de résonance (RL2), de la première diode de roue libre (D1) et d'une première bobine de résonance (RL1), **en ce qu'**en parallèle à la première diode de roue libre (D1) est disposé un circuit série constitué d'un deuxième condensateur de roue libre (FC2), de la deuxième diode de roue libre (D2) et d'un premier condensateur de roue libre (FC1), **en ce qu'**en outre un point de liaison entre la deuxième diode de roue libre (D2) et le premier condensateur de roue libre (FC1) est relié à la liaison du premier et du deuxième commutateur d'appoint à semi-conducteur (HS1, HS2) par l'intermédiaire d'un circuit série constitué d'une troisième diode (D3) et d'une quatrième diode (D4), **en ce que** la liaison du troisième et du quatrième commutateur d'appoint à semi-conducteur (HS3, HS4) est reliée à un point de liaison entre la deuxième diode de roue libre (D2) et le deuxième condensateur de roue libre (FC2) par l'intermédiaire d'une sixième diode (D6) et d'une cinquième diode (D5), **en ce qu'**un point de liaison entre la troisième et la quatrième diode (D3, D4) est relié à la liaison du premier commutateur à semi-conducteur (S1) et du deuxième commutateur à semi-conducteur (S2) par l'intermédiaire d'un premier condensateur de résonance (RC1), et **en ce qu'**un point de liaison entre la cinquième et la sixième diode (D5, D6) est relié à la liaison du troisième commutateur à semi-conducteur (S3) et du quatrième commutateur à semi-conducteur (S4) par l'intermédiaire d'un deuxième condensateur de résonance (RC2).

7. Onduleur selon la revendication 1 ou 2, **caractérisé en ce qu'**une première connexion de pont en H entre le premier commutateur à semi-conducteur (S1) et le quatrième commutateur à semi-conducteur (S4) est reliée à une première connexion de tension alternative par l'intermédiaire d'une première bobine d'accumulation (L1), et **en ce qu'**une deuxième connexion de pont en H entre le deuxième commutateur à semi-conducteur (S2) et le troisième commutateur à semi-conducteur (S3) est reliée à une deuxième connexion de tension alternative par l'intermédiaire d'une deuxième bobine d'accumulation (L2), et **en ce que** les connexions de tension alternative sont reliées l'une à l'autre par l'intermédiaire d'un enroulement primaire d'un transformateur de puissance (T$_N$), **en ce qu'**en outre la liaison du troisième et du quatrième commutateur à semi-conducteur (S3, S4) est reliée à la première connexion de pont en H par l'intermédiaire d'un circuit série constitué d'une première diode de roue libre (D1) et de la première bobine de résonance (RL1), **en ce qu'**en parallèle à la première diode de roue libre (D1) est disposé un circuit série constitué d'une deuxième diode de roue libre (D2) et d'un premier condensateur de roue libre (FC1), **en ce qu'**en parallèle au premier commutateur à semi-conducteur (S1) est disposé un circuit série constitué d'un premier condensateur de résonance (RC1) et d'une quatrième diode (D4), et **en ce qu'**un point de liaison entre la deuxième diode de roue libre (D2) et le premier condensateur de roue libre (FC1) est relié à un point de liaison entre le premier condensateur de résonance (RC1) et la quatrième diode (D4) par l'intermédiaire d'une troisième diode (D3), **en ce qu'**en outre la liaison du troisième et du quatrième commutateur à semi-conducteur (S3, S4) est reliée à la deuxième connexion de pont en H par l'intermédiaire d'un circuit série constitué d'une autre première diode de roue libre (D1') et d'une deuxième bobine de résonance (RL2), **en ce qu'**en parallèle à l'autre première diode de roue libre (D1') est disposé un circuit série constitué d'une autre deuxième diode de roue libre (D2') et d'un deuxième condensateur de roue libre (FC2), **en ce qu'**en parallèle au deuxième commutateur à semi-conducteur (S2) est disposé un circuit série constitué d'un deuxième condensateur de résonance (RC2) et d'une cinquième diode (D5), et **en ce qu'**un point de liaison entre l'autre deuxième diode de roue libre (D2') et le deuxième condensateur de roue libre (FC2) est relié par l'intermédiaire d'une sixième diode (D6) à un point de liaison entre le deuxième condensateur de résonance (RC2) et la cinquième diode (D5).

8. Onduleur selon l'une des revendications 1 à 7, **caractérisé en ce que** les connexions de tension continue sont reliées l'une à l'autre par l'intermédiaire d'un condensateur d'entrée (Cin).

9. Onduleur selon l'une des revendications 1 à 8, **caractérisé en ce que** les connexions de tension alternative sont reliées l'une à l'autre par l'intermédiaire d'un condensateur de sortie (Co).

10. Procédé pour faire fonctionner un onduleur selon l'une des revendications 1 à 2, **caractérisé en ce qu'**au début d'un cycle de cadencement, au moins un commutateur à semi-conducteur (S1, S2, S3, S4) du pont en H est mis en circuit, **en ce qu'**ainsi la tension continue d'entrée est amenée sur les éléments de résonance inductifs (RL, RL1, RL2) du circuit de résonance, par suite de quoi le courant s'écoulant encore comme courant de roue libre à travers les éléments de résonance inductifs (RL, RL1, RL2) cesse et sa direction s'inverse, et **en ce que** par la suite, au moyen de ce courant, de l'énergie provenant d'éléments de résonance capacitifs (RC1, RC2, RC3, RC4) est transmise à des éléments de roue libre capacitifs (FC, FC1, FC2), **en ce qu'**après écoulement d'une durée de connexion prédéterminée, ledit au moins un commutateur à semi-conducteur (S1, S2, S3, S4) de cadencement est à nouveau déconnecté, et au moins une partie du courant de roue libre s'écoule à travers la deuxième diode de roue libre (D2, D2'), les éléments de roue libre capacitifs (FC, FC1, FC2), et les éléments de résonance inductifs (RL1, RL2) jusqu'à ce que les éléments de roue libre capacitifs (FC, FC1, FC2) soient déchargés et que le courant de roue libre restant s'écoule à travers la première diode de roue libre (D1,D1') et les éléments de résonance inductifs (RL1, RL2).

FIG 1

FIG 2

FIG 3

FIG 4

FIG 5

FIG 6

FIG 7

FIG 8

## FIG 9

## FIG 10

## FIG 11

# FIG 12

# FIG 13

# FIG 14

**FIG 15**

**FIG 16**

FIG 17

FIG 18

## FIG 19

## FIG 20

# FIG 21

# FIG 22

## FIG 23

## FIG 24

## FIG 25

## FIG 26

# FIG 27

# FIG 28

# FIG 29

**FIG 30** Stand der Technik

**FIG 31**

FIG 32

FIG 33

## FIG 34

## FIG 35

**FIG 36**

**FIG 37**

FIG 38

FIG 39

FIG 40

FIG 41

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4937725 A
- JP 2001320884 A
- JP 2006197711 A